# EUROPÄISCHE PATENTANMELDUNG

(11) **EP 2 390 549 A2**
(43) Veröffentlichungstag der Anmeldung: **30.11.2011**
(21) Anmeldenummer: 11004419.5
(22) Anmeldetag: 30.05.2011
(51) Int. Cl.: F17C 1/06

(54) **Behälter zum Aufnehmen und Speichern von Flüssigkeiten und viskosen Stoffen, insbesondere von kyrogenen Fluiden, und Verfahren zu dessen Herstellung sowie dessen Verwendung**

(30) Priorität: 31.05.2010 DE 102010022261; 31.08.2010 DE 102010035911
(71) Anmelder: MT Aerospace AG, 86153 Augsburg (DE)
(72) Erfinder: Sönke, Carow, 86199 Augsburg (DE); Wenzel, Peter, 82205 Gilching (DE)
(74) Vertreter: Grape & Schwarzensteiner

(57) **Zusammenfassung**

Die Erfindung betrifft einen Behälter zum Aufnehmen und Speichern von Flüssigkeiten und viskosen Stoffen, insbesondere von kryogenen Fluiden, mit einem Mantel (12) und mindestens einer Trennwand (14), welche den Innenraum (16) des Behälters (10) in wenigstens zwei einander benachbarte Kammern (18, 18') unterteilt, dadurch gekennzeichnet, dass die mindestens eine Trennwand (14) in Sandwichbauweise ausgebildet ist, wobei die mindestens eine Trennwand (14) zwei jeweils einer der wenigstens zwei einander benachbarten Kammern (18, 18') zugewandte Deckschichten (20, 20') und eine in einem Zwischenraum (24) zwischen den zwei Deckschichten (20, 20') angeordnete, mechanische Kräfte und/oder Momente übertragende und wärmeisolierende oder einen Wärmefluss reduzierende Zwischenschicht (22) aus Waben umfasst, und Verfahren zu dessen Herstellung sowie eine Verwendung dessen.

## Beschreibung

Die vorliegende Erfindung betrifft einen Behälter zum Aufnehmen und Speichern von kryogenen Fluiden, insbesondere von kryogenen Flüssigkeiten und viskosen Stoffen, und Verfahren zu dessen Herstellung sowie dessen Verwendung.

Heutige Trägerraketen erzielen durch das Stufungsprinzip eine Verbesserung ihrer Nutzlastkapazität. Die Nutzlastkapazität wird dabei in besonders hohem Maße neben der Leistungsfähigkeit der Oberstufe der Trägerrakete durch die Strukturmasse beeinflusst. Um eine effiziente Konzipierung der Oberstufe zu gewährleisten, werden weitreichende Anstrengungen unternommen, um die Strukturmasse, bestimmt durch funktionale Komponenten, wie zum Beispiel Isolierung, Tankwände etc., möglichst gering zu halten.

Im Mittelpunkt einer Auslegung der Oberstufe steht unabhängig von dem Missionsprofil grundsätzlich immer eine masseeffiziente Konstruktion. Die Strukturbauteile müssen bei möglichst geringem Gewicht die geforderte Funktion unter den herrschenden mechanischen, thermischen und chemischen Lasten erfüllen. Weiterhin ist der für die Oberstufe verfügbare Bauraum durch die Architektur der Trägerrakete selbst beschränkt.

Im Falle von lang andauernden Frei-Flugphasen, wie sie bei Geotransfer-Orbit (GTO)- oder interplanetaren Missionen erforderlich sind, treten thermale Anforderungen verstärkt in den Vordergrund der Oberstufentechnologie.

Speziell die Funktion einer Speicherung der als Treibstoff/Oxidator-Gemisch verwendeten kryogenen Fluiden Sauerstoff/Wasserstoff führt zu erheblichen mechanischen und thermischen Belastungen und Anforderungen.

Weiterhin spielt die thermale Entkopplung der gespeicherten Fluide durch eine leichte, effiziente und zuverlässige Isolation eine wesentliche Rolle. Ab dem Zeitpunkt der Betankung einer Oberstufe ist aufgrund der unterschiedlichen Temperatur von zum Beispiel Sauerstoff (∼ 90 K) und Wasserstoff (∼ 24 K) eine Interaktion zwischen dem wärmeren Fluid Sauerstoff und dem kälteren Fluid Wasserstoff festzustellen. Infolgedessen kommt es zu einer erhöhten Verdampfung und damit zu einem verstärkten Verlust von Wasserstoff. Dieser Effekt hält während der gesamten Flugphase an. Besonders bei langen Frei-Flugphasen resultiert der Verlust von Wasserstoff in einer deutlichen Reduktion des Treibstoffvorrats bzw. der Nutzlastkapazität.

Derartige Behälter sind allgemein bekannt. So ist beispielsweise in der US 5 085 343 A ein Behälter als Tank für ein Raumfahrzeug beschrieben. Der Behälter ist aus einem Mantel und mindestens einer Trennwand, welche den Innenraum des Behälters in wenigstens zwei einander benachbarte Kammern zum getrennten Aufnehmen und Speichern von Sauerstoff und Wasserstoff unterteilt, gebildet. Die Trennwand, die einen gemeinsamen Tankboden darstellt, umfasst zwei jeweils einer der zwei einander benachbarten Kammern zugewandte Deckschichten mit einer zwischengeordneten Wabenstruktur. Die Wabenstruktur weist eine zelluläre Konfiguration auf und besteht aus mit Fasern imprägnierten Kunststoffen oder einer Aluminiumlegierung. Da eine Befestigung der Wabenstruktur an den zwei Deckschichten erhebliche Nachteile mit sich bringt, wie ausführlich erläutert, ist die Wabenstruktur ausschließlich über eine zusätzliche Deckschicht aus faserverstärktem Laminat an einer der zwei Deckschichten angebracht. Zwischen dieser zusätzlichen Deckschicht und der anderen der beiden Deckschichten ist mithin konstruktiv ein Spalt zum Ausgleich von Fertigungsungenauigkeiten und von Verformungen infolge von Druckbeaufschlagungen vorgesehen. Zudem soll der Spalt, der mit Inertgas befüllt oder an den ein Vakuum angelegt ist, einer Übertragung von Wärme entgegenwirken. In der Praxis hat sich jedoch herausgestellt, dass der bekannte Behälter den mechanischen und thermischen Anforderungen aufgrund dessen konstruktiver Ausgestaltung nicht, zumindest nicht hinreichend genügt. Einerseits ist eine Übertragung von mechanischen Kräften und/oder Momenten aufgrund des Spaltes zwischen der zusätzlichen Deckschicht aus faserverstärktem Laminat und der anderen der zwei Deckschichten vollständig ausgeschlossen. Andererseits ist die wärmeisolierende oder einen Wärmefluss reduzierende Wirkung aufgrund der Größe des gebildeten Hohlraumes infolge der Befestigung der zusätzlichen Deckschicht aus faserverstärktem Laminat an der einen der zwei Deckschichten im Bereich des Äquators der einen Deckschicht erheblich vermindert. Durch die zusätzliche Deckschicht aus faserverstärktem Laminat ergeben sich darüber hinaus wesentliche Nachteile hinsichtlich einer Gewichtszunahme und einer arbeits- sowie kostenintensiven Herstellung.

Der vorliegenden Erfindung liegt daher die Aufgabe zugrunde, einen Behälter zum Aufnehmen und Speichern von Flüssigkeiten und viskosen Stoffen, insbesondere von kryogenen Fluiden, zur Verfügung zu stellen, mit welchem sich die obigen Nachteile verhindern lassen, welcher mithin konstruktiv besonders einfach, zugleich kompakt und stabil sowie sehr leichtbauend ist, eine Übertragung hoher Kräfte und Momente ermöglicht, damit einhergehend eine hohe Festigkeit und Steifigkeit aufweist, für eine gleichermaßen effiziente und leichtbauende Wärmeisolierung sorgt und in der Herstellung ausgesprochen kostengünstig ist, sowie ein Verfahren zu dessen Herstellung sowie dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen und Speichern von kryogenen Fluiden, insbesondere von kryogenen Flüssigkeiten und viskosen Stoffen, mit einem Mantel und mindestens einer Trennwand, welche den Innenraum des Behälters in wenigstens zwei einander benachbarte Kammern unterteilt, wobei die mindestens eine Trennwand in Sandwichbauweise ausgebildet ist und zwei jeweils einer der wenigstens zwei einander benachbarten Kammern zugewandte Deckschichten sowie eine in einem Zwischenraum zwischen den zwei Deckschichten angeordnete, mechanische Kräfte und/oder Momente übertragende und wärmeisolierende oder einen Wärmefluss reduzierende Zwischenschicht aus Waben umfasst, wobei die mechanische Kräfte und/oder Momente übertragende und wärmeisolierende oder einen Wärmefluss reduzierende Zwischenschicht aus Waben den Zwischenraum zwischen den zwei Deckschichten vollständig oder im Wesentlichen vollständig ausfüllt und mit den zwei Deckschichten verklebt ist, wird eine besonders einfache, zudem kompakte und stabile Bauweise des Behälters von verhältnismäßig geringem Gewicht erreicht. Darüber hinaus ist eine hohe Kraft-und/oder Momentenübertragung über die Trennwand des erfindungsgemäßen Behälters ermöglicht. Zugleich weist der erfindungsgemäße Behälter eine hohe Festigkeit und Steifigkeit auf. Insbesondere ist der erfindungsgemäße Behälter gegenüber hohem Innen- und Außendruck unempfindlich. Demnach sind plastische Verformungen des Behälters unter einem spezifizierten maximalen Betriebsinnendruck ausgeschlossen. Zudem ist der erfindungsgemäße Behälter gegen Beulen unempfindlich. Gleichermaßen weist der erfindungsgemäße Behälter den zusätzlichen wesentlichen Vorteil auf, eine effiziente und leichtbauende Wärmeisolierung oder zumindest eine ausreichende Reduzierung des Wärmeflusses infolge des unterschiedlichen Temperaturgradienten durch die in den wenigstens zwei einander benachbarten Kammern aufgenommenen und gespeicherten Fluide sicherzustellen. Durch die vollständige oder im Wesentlichen vollständige Ausfüllung ist ein umfassender Kontakt zwischen der Zwischenschicht und den zwei Deckschichten der Trennwand ermöglicht. Dadurch lassen sich mechanische Kräfte und/oder Momente zwischen den zwei Deckschichten und zwischen den zwei benachbarten Kammern des Behälters beliebig übertragen. Dadurch ist auch eine zuverlässige Isolation der zwei einander benachbarten Kammern, welche Fluide unterschiedlicher Temperatur aufnehmen und speichern, sichergestellt. Schließlich gestaltet sich die Herstellung des erfindungsgemäßen Behälters einfach und wenig arbeitsintensiv und ist somit ausgesprochen kostengünstig.

Im Ergebnis zeichnet sich der Behälter nach der Erfindung, welcher die Sandwichbauweise nutzt, durch eine Vielzahl von Vorteilen aus. Eine gemeinsame Trennwand zwischen zwei einander benachbarten Kammern des Behälters, welche Sauerstoff bzw. Wasserstoff aufnehmen und speichern, führt, im Vergleich zu zwei getrennten Behältern mit zwei gesonderten Trennwänden, zu einer Massenreduktion. Gleichzeitig werden die Gesamtlänge des Behälters und damit der erforderliche Bauraum verringert. Die Sandwichbauweise ermöglicht eine masseeffiziente Konstruktion bei insbesondere beulkritischen, aber ebenso festigkeitskritischen Bauteilen. Letztlich kann durch die Sandwichbauweise eine optimale Isolationswirkung erzielt werden. Durch die benachbarte Anordnung der zwei Kammern, die mit Sauerstoff bzw. Wasserstoff befüllt sind, kommt es im Allgemeinen zu einem Wärmefluss und somit zu einem sogenannten Abdampfen von Wasserstoff. Um die abgedampfte Masse von Wasserstoff zu minimieren, reduziert der erfindungsgemäße Behälter diesen Wärmefluss erheblich, wenn nicht vollständig durch eine geringe Wärmeleitung der gemeinsamen Trennwand insgesamt. Eine zusätzliche Isolationsschicht für die gemeinsame Trennwand (etwa eine sogenannte "Nass"-Isolation auf bzw. an der Deckschicht der Kammer, welche den Wasserstoff aufnimmt und speichert) ist überflüssig. Somit erfüllt die gemeinsame Trennwand in Sandwichbauweise die mechanischen und thermischen Anforderungen gleichermaßen. Die benötigte strukturmechanische und thermische Funktionalität sind in einem Bauteil vereint.

Weitere vorteilhafte Einzelheiten des erfindungsgemäßen Behälters sind in den Ansprüchen 2 bis 11 beschrieben.

Von Interesse für eine ausgesprochen einfache und damit kostengünstige Bauweise zum einen und eine hohe Funktionszuverlässigkeit in vor allem mechanischer, aber auch thermischer, Hinsicht zum anderen sind die Merkmale des Anspruchs 2. Danach ist die mechanische Kräfte und/oder Momente übertragende und wärmeisolierende oder einen Wärmefluss reduzierende Zwischenschicht aus Waben mit einem Klebefilm oder einem pastösen Kleber mit der konvexen Oberfläche der unteren Deckschicht der Trennwand oder der konkaven Oberfläche der oberen Deckschicht der Trennwand verklebt, wobei Zwischenräume zwischen zueinander benachbarten Segmenten von Waben mit einem expandierenden Klebstoff oder Spleißkleber gefüllt sind.

Von ganz besonders großer Bedeutung sind die konstruktiven Maßnahmen des Anspruchs 3, um eine ausgesprochen einfache und damit kostengünstige Bauweise und eine hohe Funktionszuverlässigkeit in mechanischer und thermischer Hinsicht zu ermöglichen. Demzufolge ist die mechanische Kräfte und/oder Momente übertragende und wärmeisolierende oder einen Wärmefluss reduzierende Zwischenschicht aus Waben mit einer Hilfsschicht versehen, die mit der konkaven Oberfläche der oberen Deckschicht der Trennwand oder der konvexen Oberfläche der unteren Deckschicht der Trennwand unter Auftrag oder Einbringung eines Klebstoffs, insbesondere eines aufschäumenden Klebstoffs, vorzugsweise eines pastösen Klebers, Klebefilms oder Epoxidharzes, oder eines expandierenden Klebstoffs oder Spleißklebers, verklebt ist. Auf diese Weise lassen sich ausgesprochen hohe Festigkeiten erreichen, da die Kräfte aus den Wabenwänden durch die erfindungsgemäße Hilfsschicht flächig verteilt werden. Damit einhergehend kann ein Klebstoff, etwa mit niedrigerer Festigkeit, entlastet werden bzw. kann die Festigkeit eines Klebstoffs mit ohnehin hoher Festigkeit noch zusätzlich erhöht werden.

Die Hilfsschicht nach der Erfindung kann entsprechend den Merkmalen des Anspruchs 4 in Abhängigkeit des verwendeten Klebstoffs unterschiedlich ausgestaltet sein. Demnach kann die Hilfsschicht flüssigkeitsdicht ausgebildet sein, um die Waben flüssigkeitsdicht zu verschließen bzw. zu versiegeln. Dies ist vor allem dann von Vorteil, wenn der Klebstoff selbst flüssig oder fließfähig ist, beispielsweise eine niedrige Viskosität aufweist. Der nachfolgend auf die Hilfsschicht aufzutragende bzw. einzubringende Klebstoff etc. zur Verklebung der Zwischenschicht aus Waben mit der entsprechenden Oberfläche des zugeordneten Deckschicht kann somit nicht in die einzelnen, zu diesem Zeitpunkt noch offenen Wabenzellen gelangen und die Wabenzellen (aus- bzw. auf)füllen, wodurch Gewicht und thermische Isolierfähigkeit der Zwischenschicht aus Waben nachteilig beeinflusst werden könnten. Außerdem kann die Hilfsschicht porös, halbporös oder gas- oder luftdurchlässig ausgebildet sein, um eine übermäßige Expansion des Klebstoffs zu verhindern. Dies ist vor allem dann von Vorteil, wenn ein Klebstoff expandiert bzw. aufschäumt und dabei gegebenenfalls Gas- oder Luftblasen bzw. -einschlüsse erzeugt. Die Gas- oder Luftblasen bzw. -einschlüsse können daher durch die Hilfsschicht diffundieren und entweichen. Schließlich kann die Hilfsschicht auch ohne weiteres flüssigkeitsdicht und zugleich porös, halbporös oder gas- oder luftdurchlässig ausgebildet sein, soweit dies für den verwendeten Klebstoff von Vorteil ist.

In diesem Zusammenhang umfasst die Zwischenschicht aus Waben nach Anspruch 5 vorteilhafterweise einen Klebefilm, ohne oder mit wenigstens einer Lage aus vorimprägniertem Faserhalbzeug (Prepreg) und/oder textilem Halbzeug, insbesondere Glasfasergewebe.

Um gegebenenfalls vorhandene Poren zu versiegeln oder eine ausreichende Haftung sicherzustellen, kann die mechanische Kräfte und/oder Momente übertragende und wärmeisolierende oder einen Wärmefluss reduzierende Zwischenschicht aus Waben nach Anspruch 6 in ganz vorteilhafter Weise einen flüssigen oder pastösen Spritzfüller und/oder einen Haftvermittler umfassen, der auf die Hilfsschicht auftragbar oder mit dieser verklebbar ist. Eine solche Ausgestaltung bietet sich insbesondere an, wenn die Hilfsschicht nicht oder nur bedingt flüssigkeitsdicht ausgebildet ist.

In alternativer Ausgestaltung kann die Hilfsschicht der mechanische Kräfte und/oder Momente übertragenden und wärmeisolierenden oder einen Wärmefluss reduzierenden Zwischenschicht aus Waben nach Anspruch 7 gleichermaßen eine Siegelfolie umfassen. Die Siegelfolie ist einseitig, vorzugsweise beidseitig, mit einem Klebefilm beschichtet. Der wesentliche Vorteil einer solchen Siegelfolie besteht in einer guten Reproduzierbarkeit des Behälters einerseits und einer Verkürzung der Fertigungszeit des Behälters andererseits.

Vorzugsweise liegt es im Rahmen der Erfindung, dass die Waben der mechanische Kräfte und/oder Momente übertragenden und wärmeisolierenden oder einen Wärmefluss reduzierenden Zwischenschicht nach Anspruch 8 Wände aufweisen, die mit Perforationen und/oder Schlitzen zur Kommunikation zwischen den einzelnen Wabenzellen versehen sind. Auf diese Weise ist ein Gasaustausch zwischen den einzelnen Wabenzellen ermöglicht. Dies wiederum macht einen vielseitigen Einsatz von unterschiedlichsten Klebstoffen, wie zum Beispiel einem Gas- oder Luftblasen bzw. -einschlüsse erzeugenden oder blasenhaltigen Spleißkleber, möglich. Damit einhergehend wird gleichzeitig die Festigkeit der Klebeverbindung durch derartige Gasblasen nicht beeinträchtigt, da möglicherweise entstehende Gasblasen durch die Perforationen und/oder Schlitze in den Wänden der Waben austragbar sind, was wiederum die Lebensdauer des erfindungsgemäßen Behälters erhöht.

Insbesondere ist dabei erfindungsgemäß vorgesehen, dass die Schlitze der Waben der einen der zwei Deckschichten, mit welcher die Zwischenschicht aus Waben zuerst verklebt wird, zugewandt angeordnet sind.

Darüber hinaus liegt es im Rahmen der Erfindung, dass die mechanische Kräfte und/oder Momente übertragende und wärmeisolierende oder einen Wärmefluss reduzierende Zwischenschicht aus Waben nach Anspruch 9 eine von der Mitte hin zu einem rand- bzw. umfangsseitigen Bereich der zwei Deckschichten gleiche Dichte und Festigkeit aufweist. In alternativer Ausgestaltung dazu kann es von Vorteil sein, eine Zwischenschicht aus Waben in einem rand- bzw. umfangsseitigen Bereich der zwei Deckschichten vorzusehen, die eine Dichte und Festigkeit aufweist, welche höher ist als die Dichte und Festigkeit der Zwischenschicht aus Waben in der Mitte der zwei Deckschichten. Dies kann durch Anpassung der geometrischen Verhältnisse, nämlich eine sogenannte "Aufweitung" der Dicke bzw. Höhe der Zwischenschicht aus Waben von der Mitte, d.h. vom Pol, hin zu einem rand- bzw. umfangsseitigen Bereich, d.h. zum Äquator, und/oder durch Änderung der Materialeigenschaften der Zwischenschicht aus Waben erfolgen. Beispielsweise kann die Zwischenschicht im Querschnitt am Pol eine Dicke bzw. Höhe von ca. 40 mm und am Äquator von ca. 100 mm aufweisen. Beides führt zu einer erheblichen Verbesserung beim Ableiten von Schubkräften.

Dazu alternativ oder kumulativ ist es zweckmäßig, die mechanische Kräfte und/oder Momente übertragende und wärmeisolierende oder einen Wärmefluss reduzierende Zwischenschicht aus Waben nach Anspruch 10 in einem rand- bzw. umfangsseitigen Bereich der zwei Deckschichten mit einer,Vergussmasse bzw. Gießmasse abzudichten.

In diesem Zusammenhang kann die Vergussmasse dabei aus einem offen- oder geschlossenporigen Polymer-Schaum, insbesondere aus Polyurethan, Polyethylen oder Epoxidharzen, gebildet sein, und insbesondere mit Hohlkugeln aus Kunststoff oder Glas versehen sein. Ein offen- oder geschlossenporiger Polymer-Schaum kann bei geringer Strukturmasse und geringem Gewicht hohe mechanische Lasten übertragen und weist sehr gute Isolationseigenschaften auf. Durch die Hohlkugeln lässt sich zum einen das Gewicht gering halten und zum anderen die thermische Isolationswirkung erhöhen. Dabei beeinflussen die Hohlkugeln die Fließfähigkeit, die Expansions- und die Aushärtegeschwindigkeit der Vergussmasse.

Als zweckmäßig hat sich erwiesen, dass die zwei jeweils einer der wenigstens zwei einander benachbarten Kammern zugewandten Deckschichten der Trennwand rotationssymmetrisch und/oder nicht rotationssymmetrisch bzw. schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildet sind. Als besonders vorteilhaft hat sich eine erfindungsgemäße Ausgestaltung des Behälters in Form einer vollständigen Halbkugel erwiesen. Wenn der Druck in der mit zum Beispiel Wasserstoff als Brennstoff befüllten Kammer größer ist als in der mit Sauerstoff befüllten Kammer, kann der erfindungsgemäße Behälter aufgrund der als Halbkugel ausgestalteten Form selbst größten Druckunterschieden ausgesetzt werden, ohne dass ein Stabilitätsversagen auftritt.

Nach Anspruch 11 können die zwei jeweils einer der wenigstens zwei einander benachbarten Kammern zugewandten Deckschichten der Trennwand eine zueinander im Wesentlichen identische Form aufweisen. Für den Fall einer insbesondere halbkugelförmigen oder damit vergleichbaren Querschnittsform der zwei Deckschichten kumuliert jedoch die Schubspannung im Bereich von deren Äquator, da die gesamte Belastung des Domes in die zwei etwa Y-förmigen Ringelemente eingeleitet wird. Um die Einleitung des Kraft- bzw. Schubflusses in die Ringstruktur maßgeblich zu verbessern, weisen die zwei jeweils einer der wenigstens zwei einander benachbarten Kammern zugewandten Deckschichten der Trennwand alternativ dazu und ganz bevorzugt eine voneinander abweichende Form auf, derart, dass die Deckschichten vom Pol zum Äquator hin voneinander zunehmend beabstandet sind. Eine solche Aufweitung vom Pol hin zum Äquator dient mithin einem verbesserten Abtragen von Schubkräften in die etwa Y-förmigen Ringelemente.

Von besonderem Vorteil sind die konstruktiven Merkmale, wonach die zwei jeweils einer der wenigstens zwei einander benachbarten Kammern zugewandten Deckschichten der Trennwand durch Spinformen hergestellt sind.

Darüber hinaus ist/sind der Behälter, insbesondere der Mantel und die etwa Y-förmigen Ringelemente des Behälters, leichtbauend ausgebildet.

Des Weiteren ist/sind der Behälter, insbesondere der Mantel und die etwa Y-förmigen Ringelemente des Behälters, vorzugsweise aus Metall, insbesondere aus Stahl, Edelstahl, Aluminium, Titan, einer Legierung daraus und/oder einer Kombination daraus gebildet.

Diese Aufgabe wird weiterhin in verfahrenstechnischer Hinsicht auf überraschend einfache Weise durch die Merkmale des Anspruchs 12 gelöst.

Die Ausgestaltung des erfindungsgemäßen Verfahrens zum Herstellen eines Behälters zum Aufnehmen und Speichern von kryogenen Fluiden, insbesondere von kryogenen Flüssigkeiten und viskosen Stoffen, mit einem Mantel und mindestens einer Trennwand, welche den Innenraum des Behälters in wenigstens zwei einander benachbarte Kammern unterteilt, umfassend folgende Schritte:
a) Herstellen von zwei jeweils einer der wenigstens zwei einander benachbarten Kammern zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten der Trennwand,
b) Verkleben einer mechanische Kräfte und/oder Momente übertragenden und wärmeisolierenden oder einen Wärmefluss reduzierenden Zwischenschicht aus Waben mit der konvexen Oberfläche der unteren Deckschicht der Trennwand oder der konkaven Oberfläche der oberen Deckschicht der Trennwand mittels eines Klebefilms oder eines pastösen Klebers,
c) Aufbringen oder Auftragen einer Hilfsschicht auf die Zwischenschicht aus Waben, Verpressen der Hilfsschicht und der Zwischenschicht aus Waben miteinander unter Vakuumbeaufschlagung oder anderer mechanischer Beaufschlagung und Aushärten der Hilfsschicht,
d) Ausrichten und Fixieren der zwei Deckschichten der Trennwand zueinander und mit deren konkaven oder konvexen Oberflächen,
e) Auftragen eines Klebstoffs, insbesondere eines aufschäumenden Klebstoffs, vorzugsweise eines pastösen Klebers, Klebefilms oder Epoxidharzes, oder eines expandierenden Klebstoffs oder Spleißklebers, auf die Hilfsschicht und/oder auf die konkave Oberfläche der oberen Deckschicht der Trennwand oder die konvexe Oberfläche der unteren Deckschicht der Trennwand, oder Einbringen eines Klebstoffs, insbesondere eines aufschäumenden Klebstoffs, vorzugsweise eines pastösen Klebers, eines Epoxidharzes oder eines expandierenden Klebstoffs oder Spleißklebers, in einen Zwischenraum zwischen der Hilfsschicht und der konkaven Oberfläche der oberen Deckschicht der Trennwand oder der konvexen Oberfläche der unteren Deckschicht der Trennwand, und
f) Aushärten des auf die Hilfsschicht aufgetragenen oder in den Zwischenraum zwischen der Hilfsschicht und der konkaven Oberfläche der oberen Deckschicht der Trennwand oder der konvexen Oberfläche der unteren Deckschicht der Trennwand eingebrachten Klebstoffs,
   hat sich in der Praxis neben den bereits im Zusammenhang mit dem Behälter nach der Erfindung beschriebenen Vorteilen, welche das erfindungsgemäße Verfahren gleichermaßen aufweist, als besonders vorteilhaft erwiesen. So ist ein Verkleben von Waben bzw. der Zwischenschicht aus Waben mit den zwei Deckschichten ohne jeden zusätzlichen zeit- und kostennintensiven Aufwand ermöglicht. Mittels der erfindungsgemäßen Verfahren lässt sich daher eine einfache, zugleich sehr zuverlässige Anbindung über die gesamten Oberflächen der Deckschichten der Trennwand erreichen, und zwar selbst trotz herstellungsbedingter Formabweichungen (Toleranzen), welche häufig gerade bei Verfahren, wie etwa dem Spinformen, anzutreffen sind.

Weitere vorteilhafte Einzelheiten der erfindungsgemäßen Verfahren sind in den Ansprüchen 13 bis 20 beschrieben.

Vorzugsweise werden die zwei Deckschichten der Trennwand gemäß Schritt a) durch Spinformen hergestellt.

Des Weiteren wird/werden die Oberfläche/n der Deckschichten der Trennwand vor dem Einbringen der Zwischenschicht aus Waben in den Zwischenraum zwischen den zwei Deckschichten der Trennwand gesäubert und/oder chemisch vorbehandelt.

Weiterhin ist erfindungsgemäß vorgesehen, dass das Verkleben gemäß Schritt b) nach Anspruch 13 ein Aufbringen der mechanische Kräfte und/oder Momente übertragenden und wärmeisolierenden oder einen Wärmefluss reduzierenden Zwischenschicht aus Waben auf die konvexe Oberfläche der unteren Deckschicht der Trennwand oder die konkaven Oberfläche der oberen Deckschicht der Trennwand mittels des Klebefilms oder pastösen Klebers, ein Verpressen der unteren Deckschicht oder der oberen Deckschicht der Trennwand mit der Zwischenschicht aus Waben mittels Vakuumbeaufschlagung oder anderer mechanischer Beaufschlagung und ein Aushärten des Klebefilms oder des pastösen Klebers, gegebenenfalls unter Wärmeeinwirkung, vorzugsweise mittels Infrarot- oder Mikrowellenbestrahlung, umfassen kann. Die einzelnen Teilschritte des Anspruchs 22 können selbstverständlich jederzeit auch unabhängig voneinander verwirklicht werden.

Nach Anspruch 14 werden Zwischenräume zwischen zueinander benachbarten Segmenten von Waben zweckmäßigerweise mit einem expandierenden Klebstoff oder Spleißkleber gefüllt, der insbesondere in Schritt b) ausgehärtet wird.

Zweckmäßigerweise wird nach dem Verkleben gemäß Schritt b) die Kontur der konkaven Oberfläche der oberen Deckschicht der Trennwand oder der konvexen Oberfläche der unteren Deckschicht der Trennwand vermessen und wird die ausgehärtete Zwischenschicht aus Waben zur Anpassung an die Kontur der konkaven Oberfläche der oberen Deckschicht der Trennwand oder der konvexen Oberfläche der unteren Deckschicht der Trennwand und/oder zur Bildung eines Fügespaltes zwischen der konkaven Oberfläche der oberen Deckschicht der Trennwand oder der konvexen Oberfläche der unteren Deckschicht der Trennwand durch Spanabhebung bearbeitet, insbesondere konturgefräst.

Entsprechend den Merkmalen des Anspruchs 15 ist erfindungsgemäß vorgesehen, ein Aufbringen oder Auftragen der Hilfsschicht auf die Zwischenschicht aus Waben gemäß Schritt c) mittels eines Klebstoffs, eines Klebefilms oder eines pastösen Klebers vorzunehmen oder zu unterstützen, der ausgehärtet wird. Darüber hinaus ist vorgesehen, das Aushärten gemäß Schritt c) der Hilfsschicht und/oder des Klebstoffs, des Klebefilms oder des pastösen Klebers unter Wärmeeinwirkung, vorzugsweise durch Infrarot- oder Mikrowellenbestrahlung, vorzunehmen.

Nach Anspruch 16 liegt es im Rahmen der Erfindung, dass auf die Zwischenschicht aus Waben eine flüssigkeitsdichte und/oder poröse, halbporöse oder gas- oder luftdurchlässige Hilfsschicht aufgebracht oder aufgetragen wird.

Weiterhin liegt es im Rahmen der Erfindung, dass nach Anspruch 17 ein Klebefilm ohne oder mit wenigstens einer Lage aus vorimprägniertem Faserhalbzeug (Prepreg) und/oder textilem Halbzeug, insbesondere Glasfasergewebe, oder eine ein- oder beidseitig mit einem Klebefilm beschichtete Siegelfolie als Hilfsschicht auf die Zwischenschicht aus Waben aufgebracht oder aufgetragen wird.

In vorteilhafter Weise wird die Hilfsschicht nach Anspruch 18 zum Verpressen und Aushärten der konvexen Oberfläche der unteren Deckschicht der Trennwand oder der konkaven Oberfläche der oberen Deckschicht der Trennwand, des Klebefilms oder des pastösen Klebers, der Zwischenschicht aus Waben und der Hilfsschicht miteinander unter Vakuumbeaufschlagung oder anderer mechanischer Beaufschlagung vor der Vakuumbeaufschlagung oder anderen mechanischen Beaufschlagung mit einer Schicht aus Abreißgewebe und einer Trennfolie, einem Belüftungsvlies sowie einer Vakuumfolie, versehen und überdeckt. Nach erfolgter Vakuumbeaufschlagung oder anderer mechanischer Beaufschlagung wird die Hilfsschicht wiederum von der Schicht aus Abreißgewebe und der Trennfolie, dem Belüftungsvlies sowie der Vakuumfolie befreit.

Entsprechend den Merkmalen des Anspruchs 19 wird auf die als Klebefilm ausgebildete Hilfsschicht in besonders vorteilhafter Weise ein flüssiger oder pastöser Spritzfüller zum Versiegeln von Poren des Klebefilms und/oder ein Haftvermittler zur Sicherstellung einer ausreichenden Haftung aufgebracht oder aufgetragen.

Bevorzugt sind die Waben mit Perforationen und/oder Schlitzen zur Kommunikation zwischen den einzelnen Wabenzellen versehen, die insbesondere der einen der zwei Deckschichten, mit welcher die Waben zuerst verklebt werden, zugewandt angeordnet werden.

Darüber hinaus ist erfindungsgemäß vorgesehen, dass das Ausrichten und Fixieren der zwei Deckschichten der Trennwand zueinander durch eine Spanneinrichtung, welche in Form und Abmessung an die Form und Abmessung der zwei Deckschichten der Trennwand angepasst ist, durchgeführt wird.

Von besonders großem Interesse für eine zuverlässige und standhafte Verklebung mit hoher Lebensdauer ist weiterhin die Ausgestaltung des erfindungsgemäßen Verfahrens nach Anspruch 20 betreffend das Auftragen bzw. Einbringen des Klebstoffs ganz allgemein, was auf verschiedenartige alternative Weisen erfolgen kann. Nachdem sich sämtliche dieser Verfahrensweisen in der Praxis beim Auftragen bzw. Einbringen einer Zwischenschicht aus Polymer-Schaum entsprechend der WO 2010/037561 A1 bereits als ausgesprochen vorteilhaft erwiesen haben und für Verfahrensweisen zum Auftragen bzw. Einbringen des Klebstoffs gleichermaßen und uneingeschränkt geeignet sind, wird an dieser Stelle vollinhaltlich Bezug auf die Offenbarung der WO 2010/037561 A1 genommen.

Demnach wird nach Anspruch 20 vorzugsweise das Auftragen des Klebstoffs, insbesondere eines aufschäumenden Klebstoffs, vorzugsweise eines pastösen Klebers, Klebefilms oder Epoxidharzes, oder eines expandierenden Klebstoffs oder Spleißklebers, auf die Hilfsschicht und auf die konkave Oberfläche der oberen Deckschicht der Trennwand oder die konvexe Oberfläche der unteren Deckschicht der Trennwand, oder das Einbringen des Klebstoffs, insbesondere eines aufschäumenden Klebstoffs, vorzugsweise eines pastösen Klebers, eines Epoxidharzes, oder eines expandierenden Klebstoffs oder Spleißklebers, in einen Zwischenraum zwischen der Hilfsschicht und der konkaven Oberfläche der oberen Deckschicht der Trennwand oder der konvexen Oberfläche der unteren Deckschicht der Trennwand, mit einer Befüllungs- oder Dosierlanze durch Gießen oder Sprühen vorgenommen.

Für eine besonderes einfache, schnelle und kostengünstige Möglichkeit zur gleichmäßigen Verteilung des Klebstoffs sorgen die alternativen Merkmale des Anspruchs 20, wonach der Klebstoff in die konkave Oberfläche der oberen Deckschicht der Trennwand in einen Bereich des Pols der oberen Deckschicht eingefüllt und durch anschließende Absenkung der konvexen Oberfläche der unteren Deckschicht der Trennwand über die konkave Oberfläche der oberen Deckschicht gleichmäßig verteilt wird.

Alternativ dazu ist erfindungsgemäß vorgesehen, den Klebstoff nach Anspruch 20 über mindestens einen Schlauch und/oder mindestens eine Ausnehmung, der/die in der ausgehärteten Zwischenschicht der Trennwand angeordnet bzw. vorgesehen ist/ sind, oder mindestens einen Kanal, der in der einen oder den zwei Deckschichten angeordnet bzw. vorgesehen ist, zu injizieren oder zu infiltrieren. Dabei kann der Klebstoff über den mindestens einen Schlauch und/oder die mindestens eine Ausnehmung in einem Bereich des Äquators der zwei Deckschichten injiziert oder infiltriert, in einen Bereich des Pols der der zwei Deckschichten geführt und anschließend durch Schwerkraft hin zu dem Bereich des Äquators der zwei Deckschichten gleichmäßig verteilt werden.

In alternativer Ausgestaltung des erfindungsgemäßen Verfahrens ist nach Anspruch 20 vorgesehen, dass der Klebstoff über den mindestens einen Kanal in einem Bereich des Pols der zwei Deckschichten injiziert oder infiltriert und anschließend durch Schwerkraft hin zu dem Bereich des Äquators der zwei Deckschichten gleichmäßig verteilt wird.

Des Weiteren ist nach Anspruch 20 darauf abgestellt, dass der Klebstoff vorzugsweise über einen (Klebe-)Spalt, der zwischen der ausgehärteten Zwischenschicht der Trennwand und der konkaven Oberfläche der oberen Deckschicht der Trennwand oder der konvexen Oberfläche der unteren Deckschicht der Trennwand gebildet ist, injiziert oder infiltriert wird. In diesem Zusammenhang kann der Klebstoff über den Spalt durch Kommunikation mit einem um die zwei Deckschichten umlaufenden Ringkanal injiziert oder infiltriert werden.

Dass der Klebstoff zur Injektion oder Infiltration vorzugsweise mit (Über-)Druck und/oder durch (Unter-)Druck beaufschlagt wird, dient einer schnellen, gezielten und gleichmäßigen Verteilung dessen.

Weiter ist erfindungsgemäß vorgesehen, dass der Klebstoff und/oder die Zwischenschicht aus Waben vorzugsweise durch eine vollflächige oder lokale Wärmebehandlung zur Reaktion gebracht wird/werden.

Zweckmäßigerweise wird/werden der Klebstoff und/oder die Zwischenschicht dabei durch einen Ofen, eine Einrichtung aus beheizbaren Matten oder eine Umlufteinrichtung vollflächig oder lokal wärmebehandelt.

Schließlich liegt es noch im Rahmen der Erfindung, den erfindungsgemäßen Behälter zum Aufnehmen und Speichern von Flüssigkeiten und viskosen Stoffen, insbesondere von kryogenen Fluiden, vorzugsweise von Sauerstoff und Wasserstoff, nach Anspruch 21 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, zu verwenden. Ganz besonders eignet sich der erfindungsgemäße Behälter für Raketen-Treibstofftanks oder Satellitentanks.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
Fig. 1 eine schematische Längsschnittansicht durch eine Ausführungsform eines erfindungsgemäß ausgebildeten Behälters,
Fig. 2 eine schematische Längsschnittansicht durch eine andere Ausführungsform eines erfindungsgemäß ausgebildeten Behälters,
Fig. 3A eine schematische, teilweise abgebrochene Schnittansicht durch eine Ausführungsform eines erfindungsgemäß ausgebildeten Behälters entsprechend Ausschnitt III in der Fig. 1, in vergrößerter Darstellung,
Fig. 3B eine schematische, teilweise abgebrochene Schnittansicht durch eine weitere Ausführungsform eines erfindungsgemäß ausgebildeten Behälters entsprechend der Fig. 3A,
Fig. 3C eine schematische, teilweise abgebrochene Schnittansicht durch eine noch andere Ausführungsform eines erfindungsgemäß ausgebildeten Behälters entsprechend der Fig. 3A bzw. 3B,
Fig. 4A bis 4D schematische Seitenansichten zum Verkleben der Zwischenschicht aus Waben mittels eines Klebefilms oder eines pastösen Klebers und anschließenden Vermessen sowie Fräsen dessen,
Fig. 5A bis 5C schematische, teilweise abgebrochene Ansichten einer Ausführungsform eines erfindungsgemäßen Verfahrens zum Herstellen einer Hilfsschicht auf/an der erfindungsgemäß ausgebildeten Zwischenschicht aus Waben eines erfindungsgemäß ausgebildeten Behälters nach den Fig. 1 bis 3C,
Fig. 6 eine schematische Ansicht des erfindungsgemäßen Verfahrens zum Auftragen oder Einbringen eines Klebstoffs auf/an der erfindungsgemäß ausgebildeten Zwischenschicht aus Waben eines erfindungsgemäß ausgebildeten Behälters nach den Fig. 1 bis 3C
Fig. 7A und 7B schematische, teilweise abgebrochene Ansichten einer anderen Ausführungsform eines erfindungsgemäßen Verfahrens zum Herstellen einer Hilfsschicht auf/an der erfindungsgemäß ausgebildeten Zwischenschicht aus Waben eines erfindungsgemäß ausgebildeten Behälters nach den Fig. 1 bis 3C,
Fig. 8A bis 8E schematische, teilweise abgebrochene Ansichten einer noch anderen Ausführungsform eines erfindungsgemäßen Verfahrens zum Herstellen einer Hilfsschicht auf/an der erfindungsgemäß ausgebildeten Zwischenschicht aus Waben eines erfindungsgemäß ausgebildeten Behälters nach den Fig. 1 bis 3C, in verkleinerter Darstellung, und
Fig. 9A und 9B schematische, teilweise abgebrochene perspektivische Ansichten von Ausführungsformen von erfindungsgemäß ausgebildeten Waben zur Verwendung in dem Verfahren nach der Erfindung entsprechend den Fig. 8A bis 8E.

Bei der nachfolgenden Beschreibung von verschiedenen Ausführungsformen eines erfindungsgemäßen Behälters 10 zum Aufnehmen und Speichern von Flüssigkeiten und viskosen Stoffen, insbesondere von kryogenen Fluiden, sind einander entsprechende, gleiche Bauteile jeweils mit identischen Bezugsziffern versehen.

Der erfindungsgemäße Behälter 10 zum Aufnehmen und Speichern von Flüssigkeiten und viskosen Stoffen, insbesondere von kryogenen Fluiden, vorzugsweise von Sauerstoff und Wasserstoff, findet in vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, Verwendung. In ganz besonderem Maße lässt sich der erfindungsgemäße Behälter 10 für ein Fluggerät der Luft- und Raumfahrt, wie etwa einen Raketen-Treibstofftank oder Satellitentank, einsetzen.

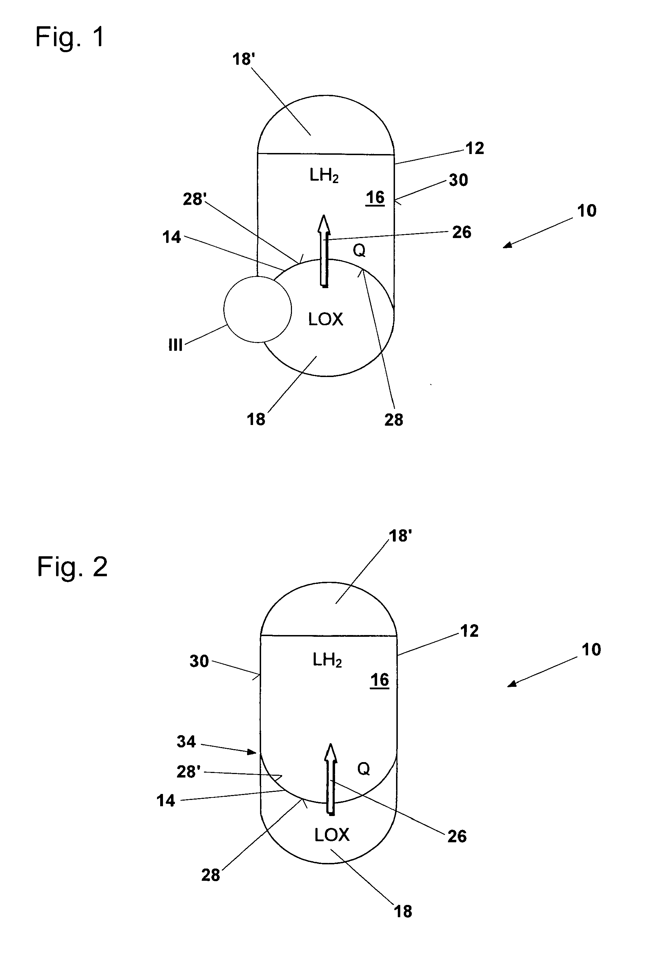

Die in den Fig. 1 und 2 schematisch dargestellten Behälter 10 nach der Erfindung umfassen einen, insbesondere dünnwandigen, Mantel 12 und mindestens eine Trennwand 14. Die mindestens eine Trennwand 14 unterteilt den Innenraum 16 des Behälters 10 in wenigstens zwei einander benachbarte Kammern 18, 18'. In den Kammern 18, 18' sind zum Beispiel kryogene Fluide, wie Sauerstoff (LOX) und Wasserstoff (LH2), aufgenommen und gespeichert, die als Treibstoff/Oxidator-Gemisch einer Oberstufe einer Trägerrakete (jeweils nicht dargestellt) Verwendung finden.

Entsprechend den Fig. 1 und 2 weisen beide Behälter 10 jeweils nur eine einzige Trennwand 14 zur Unterteilung des Innenraumes 16 in zwei gesonderte Kammern 18, 18' auf. Die Trennwand 14 ist den zwei Kammern 18, 18' des Behälters 10 gemeinsam.

Die in den Fig. 1 und 2 dargestellten Ausführungsformen des erfindungsgemäßen Behälters 10 unterscheiden sich lediglich in der Ausbildung der Trennwand 14 selbst bzw. der Anordnung der Trennwand 14 innerhalb des Mantels 12 des Behälters 10. So ist die Trennwand 14 bei der Ausführungsform des Behälters 10, die in der Fig. 1 dargestellt ist, konkav ausgebildet. Demgegenüber ist die Trennwand 14 bei der Ausführungsform des Behälters 10, die in der Fig. 2 gezeigt ist, konvex ausgestaltet. Im Übrigen stimmen die zwei Ausführungsformen der Trennwand 14 des erfindungsgemäßen Behälters 10 nach den Fig. 1 und 2 in konstruktiver Hinsicht überein.

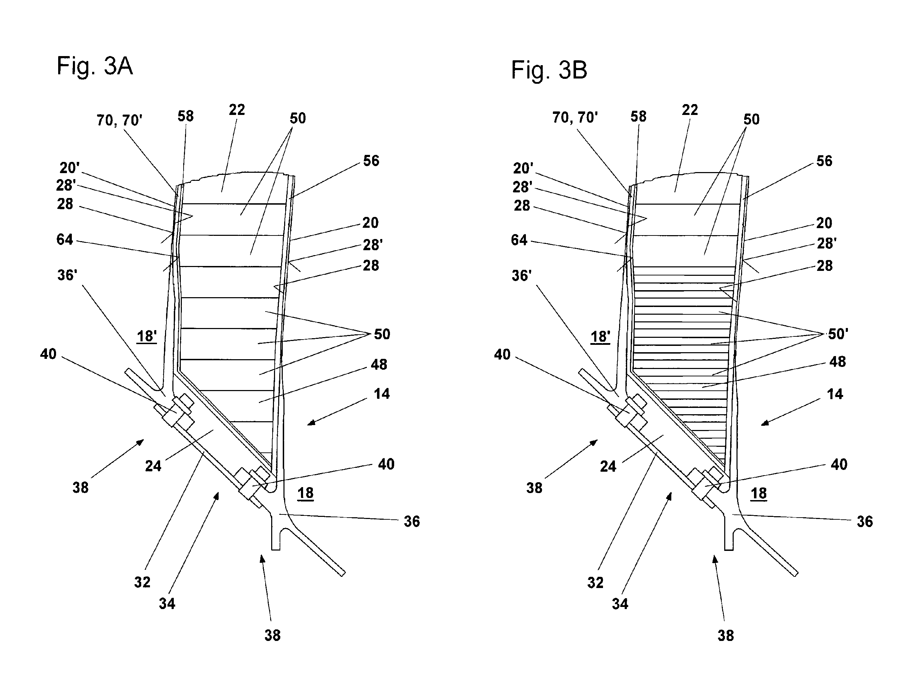

Wie sich den Ausführungsformen des erfindungsgemäßen Behälters 10 nach den Fig. 3A bis 3C entnehmen lässt, ist die mindestens eine, d.h. vorliegend einzige, Trennwand 14 in Sandwichbauweise ausgebildet.

Dabei umfasst die Trennwand 14 zwei Deckschichten 20, 20', nämlich eine untere bzw. untenliegende (d.h. hier besser rechte) Deckschicht 20 bzw. Deckblech bzw. Domschale und eine obere bzw. obenliegende (d.h. hier besser linke) Deckschicht 20' bzw. Deckblech bzw. Domschale, welche jeweils einer der zwei einander benachbarten Kammern 18, 18' zugewandt sind. Demnach ist die untere Deckschicht 20 der unteren bzw. unten angeordneten Kammer 18, die obere Deckschicht 20' der oberen bzw. oben angeordneten Kammer 18' zugewandt.

Weiterhin umfasst die Trennwand 14 eine Zwischenschicht 22 aus Waben. Die Zwischenschicht 22 aus Waben ist in einem Zwischenraum 24 zwischen den zwei Deckschichten 20, 20' angeordnet.

Einerseits ist die Zwischenschicht 22 aus Waben geeignet, mechanische Kräfte und/oder Momente zwischen den Kammern 18, 18' bzw. diesen zugewandten Deckschichten 20, 20' zu übertragen.

Andererseits weist die Zwischenschicht 22 aus Waben wärmeisolierende oder jedenfalls eine Wärmefluss reduzierende Eigenschaften auf. Wenn beispielsweise in den zwei Kammern 18, 18' kryogene Fluide, etwa Sauerstoff (LOX) und Wasserstoff (LH2), aufgenommen und gespeichert sind, ist zwischen den Kammern 18, 18' ein Temperaturgradient vorhanden. Während nämlich Sauerstoff eine Temperatur von ungefähr 90 K aufweist, besitzt Wasserstoff eine Temperatur von ungefähr 24 K. Dies hat eine Interaktion zwischen dem Sauerstoff als dem wärmeren Fluid und dem Wasserstoff als dem kälteren Fluid zur Folge. Zur Erhöhung der wärmeisolierenden oder jedenfalls eine Wärmefluss reduzierenden Eigenschaften kann der Zwischenraum 24 beispielsweise zusätzlich mit einem Inertgas gefüllt oder an ein Vakuum angelegt sein.

Zurückkommend auf die Fig. 1 und 2, findet insoweit ein Wärmefluss entsprechend Pfeil 26 zwischen der Kammer 18 und der Kammer 18' statt. Der Wärmefluss ist in den Fig. 1 und 2 mit "Q" bezeichnet. Wie bei Behältern des Standes der Technik zu beobachten ist, erfolgt der Wärmefluss entsprechend Pfeil 26 zum überwiegenden Teil über die Oberflächen 28, 28' der Deckschichten 20, 20', im Übrigen über den Mantel 12 und die Oberfläche 30 des Mantels 12 im Bereich der gemeinsamen Trennwand 14 (nicht näher dargestellt).

Aufgrund der Aufnahme und Speicherung von Sauerstoff und Wasserstoff in den zwei Kammern 18, 18' des Behälters 10 kommt es infolge des Wärmeflusses entsprechend Pfeil 26 zu einem sogenannten Abdampfen von Wasserstoff. Der Wärmefluss, der über die Oberflächen 28, 28' der Deckschichten 20, 20' entsprechend Pfeil 26 übertragen wird, kann durch die konstruktive Ausgestaltung der Trennwand 14 des Behälters 10 und die Zwischenschicht 22 aus Waben in besonders einfacher und zugleich wirkungsvoller Weise verhindert oder zumindest erheblich reduziert werden. Hierdurch wiederum lässt sich ein Abdampfen von Wasserstoff infolge Wärmeleitung zwischen den zwei Kammern 18, 18' gänzlich oder weitestgehend ausschließen oder zumindest die abgedampfte Masse des Wasserstoffes minimieren.

In vorteilhafter Weise ist der Zwischenraum 24 zwischen den zwei Deckschichten 20, 20' von der Zwischenschicht 22 aus Waben vollständig oder im Wesentlichen vollständig ausgefüllt. Durch die vollständige oder im Wesentlichen vollständige Ausfüllung des Zwischenraumes 24 ist eine Übertragung von mechanischen Kräften und/oder Momenten zuverlässig sichergestellt. Ebenso ermöglicht eine vollständige oder im Wesentlichen vollständige Ausfüllung des Zwischenraumes 24 eine bestmögliche Wärmeisolierung bzw. Reduzierung des Wärmeflusses insgesamt.

Entsprechend den Fig. 3A bis 3C umfasst die Trennwand 14 des erfindungsgemäßen Behälters 10 vorzugsweise ein Verbindungselement 32 bzw. Verbindungsblech, das zu dem Mantel 12, den Deckschichten 20, 20' und der Zwischenschicht 22 separat ausgebildet ist. Das Verbindungselement 32 der Trennwand 14 verbindet die zwei Deckschichten 20, 20', welche jeweils einer der zwei einander benachbarten Kammern 18, 18' zugewandt sind. Das Verbindungselement 32 der Trennwand 14 begrenzt dabei den Zwischenraum 24 zwischen den zwei Deckschichten 20, 20' rand- bzw. umfangsseitig, d.h. in einem Rand- bzw. Umfangsbereich 34.

Wie aus den Fig. 3A bis 3C hervorgeht, ist das Verbindungselement 32 der Trennwand 14 an den zwei Deckschichten 20, 20' mittelbar über zwei Ringelemente 36, 36', zum Beispiel mittels einer Bolzenverbindung 38 mit Blindnieten 40, befestigt. Die zwei Ringelemente 36, 36' sind etwa Y-förmig ausgestaltet und an dem Mantel 12 des Behälters 10, insbesondere mittels Verschweißung, angebracht (nicht gezeigt).

Ohne im Einzelnen dargestellt zu sein, ist es ebenso denkbar, das Verbindungselement 32 der Trennwand 14 an den zwei Deckschichten 20, 20' der Trennwand 14 unmittelbar zu befestigen.

Die zwei Deckschichten 20, 20' der Trennwand 14, die jeweils einer der zwei einander benachbarten Kammern 18, 18' zugewandt sind, sind bei den dargestellten Ausführungsformen des erfindungsgemäßen Behälters 10 nach den Fig. 1 bis 3C rotationssymmetrisch ausgebildet. Ohne im Einzelnen dargestellt zu sein, ließe sich ebenso eine nicht rotationssymmetrische Ausgestaltung der zwei Deckschichten 20, 20' verwirklichen. Dabei sind die zwei Deckschichten 20, 20' der Trennwand 14 schalenförmig, insbesondere halbkugelförmig, kugelkappenförmig, kalottenförmig, ellipsoidkallotenförmig, konisch, elliptisch, in Cassini-Form oder mit anderen Querschnittsformen ausgestaltet. Die zwei Deckschichten 18, 18' der Trennwand 14 sind in ganz vorteilhafter Weise durch Spinformen hergestellt.

Der Behälter 10, insbesondere der Mantel 12 und die etwa Y-förmigen Ringelemente 36, 36' des Behälters 10 sind in Leichtbauweise ausgeführt. Insbesondere bestehen der Behälter 10 bzw. der Mantel 12, das Verbindungselement 32 und die etwa Y-förmigen Ringelemente 36, 36' des Behälters 10 aus Metall, vorzugsweise aus Stahl, Edelstahl, Aluminium, Titan, einer Legierung daraus und/oder eine Kombination daraus.

Bei den in den Fig. 3A bis 3C gezeigten Ausführungsformen des erfindungsgemäßen Behälters 10 weisen die zwei Deckschichten 20, 20' der Trennwand 14 eine zueinander im Wesentlichen identische Form auf. Demgegenüber können die zwei Deckschichten 20, 20' der Ausführungsformen des erfindungsgemäßen Behälters 10, ohne im Einzelnen dargestellt zu sein, eine voneinander abweichende Form aufweisen, und zwar derart, dass die Deckschichten 20, 20' vom Pol 42 bzw. Apex der Deckschichten 20, 20' bzw. des von diesen gebildeten Domes des Behälters 10 zum Äquator 44 der Deckschichten 20, 20' bzw. des von diesen gebildeten Doms des Behälters 10 hin voneinander zunehmend beabstandet sind. Eine solche "Aufweitung" vom Pol 42 hin zum Äquator 44 des Domes verbessert das Abtragen von Schubkräften in die zwei etwa Y-förmigen, als Auflager dienenden Ringelemente 36, 36'.

Gleichzeitig erhält die Zwischenschicht 22 aus Waben hierdurch eine Dicke bzw. Höhe zwischen den zwei Deckschichten 20, 20', die von der Mitte 46 hin zu einem rand- bzw. umfangsseitigen Bereich 48 der zwei Deckschichten 20, 20' kontinuierlich zunimmt.

Durch eine solche zunehmende Beabstandung der zwei Deckschichten 20, 20' zueinander bzw. eine solche "Aufweitung" der Dicke bzw. Höhe der Zwischenschicht 22 aus Waben von der Mitte 46, d.h. vom Pol 42, hin zu einem rand- bzw. umfangsseitigen Bereich 48, d.h. zum Äquator 44, lässt sich das Ableiten von Schubkräften erheblich verbessern.

Bei der Ausführungsform des erfindungsgemäßen Behälters 10, die in der Fig. 3A gezeigt ist, ist die Zwischenschicht 22 aus Waben, die bis nahe an den rand- bzw. umfangsseitigen Bereich 46 der zwei Deckschichten 20, 20' heranreicht, insgesamt homogen ausgebildet. Insoweit weist die Zwischenschicht 22 aus Waben eine Dichte und Festigkeit auf, die von der Mitte 46 hin zu einem rand- bzw. umfangsseitigen Bereich 48 der zwei Deckschichten 20, 20' gleich bleibend groß ist. Insoweit besitzen die Waben 50 durchgehend eine gleiche Dichte und Festigkeit.

Bei der Ausführungsform des erfindungsgemäßen Behälters 10, die in der Fig. 3B dargestellt ist, ist die Zwischenschicht 22 aus Waben hingegen derart ausgebildet, dass die Dichte und Festigkeit der Waben 50' in dem rand- bzw. umfangsseitigen Bereich 48 der zwei Deckschichten 20, 20' höher ist bzw. ausfällt als die Dichte und Festigkeit der Waben 50 in der Mitte 46 der zwei Deckschichten 20, 20'. Durch eine solche Ausgestaltung der Zwischenschicht 22 kann die Einleitung einer im Bereich des Äquators 44, d.h. im rand- bzw. umfangsseitigen Bereich 48, kumulierenden Schubspannung in die Ringstruktur maßgeblich verbessert werden. Des Weiteren wird der Steifigkeitssprung bei einer solchen Ausgestaltung zwischen der Zwischenschicht 22 aus Waben und den zwei Deckschichten 20, 20' deutlich gemindert.

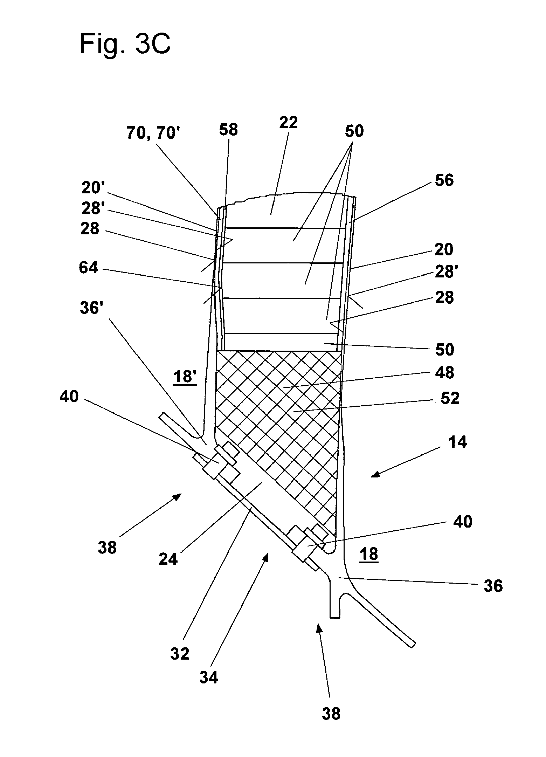

Bei der Ausführungsform des erfindungsgemäßen Behälters 10, die in der Fig. 3C dargestellt ist, ist die Zwischenschicht 22 aus Waben in dem rand- bzw. umfangsseitigen Bereich 48 der zwei Deckschichten 20, 20' mit einer Vergussmasse 52 oder Gießmasse abgedichtet. Die Vergussmasse 52 ist vorzugsweise aus einem offen- oder geschlossenporigen Polymer-Schaum, insbesondere aus Polyurethan, Polyethylen oder Epoxidharzen, gebildet. Ohne im Einzelnen dargestellt zu sein, kann die Vergussmasse 52 zusätzlich mit Hohlkugeln aus Kunststoff oder Glas versehen sein, um einerseits das Gewicht gering zu halten und andererseits die thermische Isolationswirkung zu erhöhen. Dabei beeinflussen die Hohlkugeln die Fließfähigkeit, die Expansions- und die Aushärtegeschwindigkeit der Vergussmasse 52.

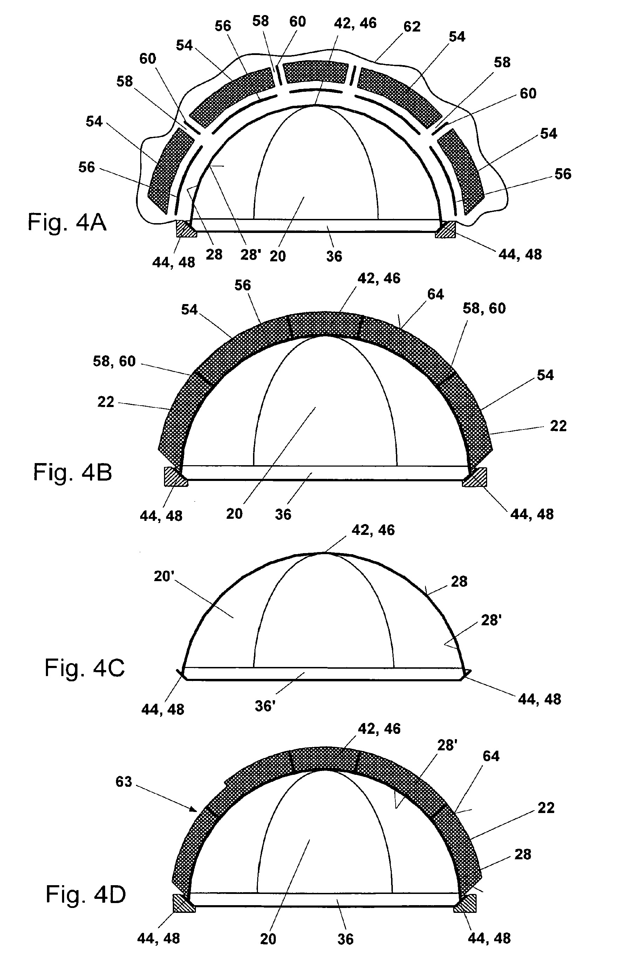

Die Herstellung der in den Fig. 1 bis 3C dargestellten Ausführungsformen des erfindungsgemäßen Behälters 10 wird nachfolgend anhand der Fig. 4A bis 9B näher erläutert:

Zunächst werden zwei Deckschichten 20, 20' der Trennwand 14, die jeweils einer der zwei einander benachbarten Kammern 18, 18' zugewandt sind, hergestellt. Die zwei Deckschichten 20, 20' werden dabei schalenförmig, insbesondere halbkugelförmig, kugelkappenförmig, kalottenförmig, ellipsoidkallotenförmig, konisch, elliptisch, in Cassini-Form oder mit anderen Querschnittsformen ausgestaltet.

In besonders vorteilhafter Weise werden die zwei Deckschichten 20, 20' der Trennwand 14 separat durch Spinformen hergestellt. Alternativ dazu können die zwei Deckschichten 20, 20' auch dadurch gefertigt werden, indem zum Beispiel mehrere Kugelsegmente etwa aus Aluminium zu einer Halbkugel zusammengeschweißt werden.

Im Anschluss daran werden die zwei Deckschichten 20, 20' der Trennwand 14 jeweils mit einem etwa Y-förmigen Ringelement 36, 36' beispielsweise ebenfalls aus Aluminium verschweißt. Insoweit wird das eine Y-förmige Ringelement 36 mit der unteren Deckschicht 20 der Trennwand 14 durch Verschweißung verbunden. Das andere Y-förmige Ringelement 36' wird hingegen an die obere Deckschicht 20' der Trennwand 14 angeschweißt. Über die beiden etwa Y-förmigen Ringelemente 36, 36' ist die Trennwand 14 des Behälters 10 schließlich an dem Mantel 12 des Behälters 10 mittels Verschweißung anbringbar, nachdem die Herstellung der Trennwand 14 selbst insgesamt abgeschlossen ist.

Die Oberfläche/n 28, 28' der Deckschichten 20, 20' der Trennwand 14 wird/werden in aller Regel gesäubert und/oder chemisch vorbehandelt, bevor die Zwischenschicht 22 aus Waben in den Zwischenraum 24 zwischen den zwei Deckschichten 20, 20' der Trennwand 14 oder vor dem Aufbringen der Zwischenschicht 22 aus Waben auf die konvexe Oberfläche 28 der unteren Deckschicht 20 der Trennwand 14 oder die konkave Oberfläche 28' der oberen Deckschicht 20' der Trennwand 14, d.h. die die Anbindungsoberfläche, eingebracht wird. Auf diese Weise lässt sich die Haftfähigkeit und damit die Anbindung der Zwischenschicht 22 an den zugewandten bzw. zugeordneten Oberflächen 28, 28' der Deckschichten 20, 20' wesentlich verbessern.

Die Zwischenschicht 22 aus Waben wird als Plattenware hergestellt und auf die benötigte Dicke gesägt. Für gekrümmte Bauteile, wie etwa den erfindungsgemäßen Behälter 10, der unter anderem zum Beispiel auch als Common Bulkhead oder dergleichen bezeichnet wird, wird die Zwischenschicht 22 aus Waben thermisch umgeformt und zu passenden Segmenten 54 von Waben 50, 50' zugeschnitten.

Wie in der Fig. 4A angedeutet ist, werden die Segmente 54 von Waben 50, 50' mit einem Klebefilm 56 oder einem pastösen Kleber auf einer der zwei Deckschichten 20, 20' aufgeklebt. Ob die Segmente 54 von Waben 50, 50' auf die konvexe Oberfläche 28 der unteren Deckschicht 20 oder die konkave Oberfläche 28' der oberen Deckschicht 20' aufgeklebt werden, bleibt letztlich dem Anwender überlassen. Es ist jedoch günstiger, die Segmente 54 von Waben 50, 50' zunächst, wie bei dem Ausführungsbeispiel der Fig. 4A bis 9B, auf die konvexe Oberfläche 28 der unteren Deckschicht 20 aufzukleben, da sämtliche Bauteile in dieser Lage einfacher zu handhaben sind.

Die Zwischenräume 58 bzw. Stöße zwischen einander benachbarten Segmenten 54 von Waben 50, 50' werden sodann mit einem expandierenden Klebstoff 60 oder Spleißkleber gefüllt.

Entsprechend der Fig. 4A werden die Segmente 54 von Waben 50, 50' mit einem Vakuumsack 62, der an den rand- bzw. umfangsseitigen Bereichen 48 der Deckschichten 20, 20' luftdicht verklebt wird, überdeckt und mit einem Vakuum beaufschlagt. Das Innere des Vakuumsackes 62 wird evakuiert, so dass der Umgebungsdruck den Vakuumsack 62 und die Segmente 54 von Waben 50, 50' gleichmäßig auf bzw. an die konvexe Oberfläche 28 der unteren Deckschicht 20 anpresst.

Die Aushärtung des Klebefilms 56 und/oder des Klebstoffs 60 erfolgt bei erhöhter Temperatur, beispielsweise in einem Ofen. Auf diese Weise wird entsprechend der Fig. 4B eine durchgehende Zwischenschicht 22 aus Waben erhalten. Die einander benachbarten Segmente 54 von Waben 50, 50' sind miteinander und mit der konvexen Oberfläche 28 der unteren Deckschicht 20 verklebt.

Da beide Deckschichten 20, 20' Konturabweichungen aufweisen können, die sich in aller Regel im Millimeterbereich bewegen, ist eine nachträgliche Anpassung erforderlich. Dazu wird die konkave Oberfläche 28' der oberen Deckschicht 20' entsprechend der Fig. 4C vermessen.

Die gemessene Form und Größe wird entsprechend der Fig. 4D durch spanabhebende Bearbeitung, zum Beispiel durch Fräsen, insbesondere Konturfräsen, der Zwischenschicht 22 von Waben, welche auf die konvexe Oberfläche 28 der unteren Deckschicht 20 aufgeklebt ist, übertragen. Bei dem in der Fig. 4D gezeigten Ausführungsbeispiel ist eine Ausfräsung 63 auf der linken Seite der Zwischenschicht 22 aus Waben erfolgt. Es entstehen mithin eine - hier - konvexe Oberfläche 64 der Zwischenschicht 22 aus Waben und eine konkave Oberfläche 28' der oberen Deckschicht 20', die zueinander passgenau sind.

Obwohl mittels Fräsens eine geometrische Anpassung der Kontur der Segmente 54 von Waben 50, 50' an die obere Deckschicht 20' möglich ist, sind Fertigungsabweichungen nicht auszuschließen. Das Verkleben bzw. Aufkleben der Zwischenschicht 22 aus Waben mit der bzw. auf die obere Deckschicht 20' muss daher gleichermaßen einen Ausgleich von Toleranzen ermöglichen.

Das Fräsen bringt den zusätzlichen Vorteil mit sich, ein Problem zu lösen, das bei einander entsprechenden rotationssymmetrischen, zum Beispiel halbkugeligen Deckschichten 20, 20' auftritt. Beim Zusammenführen der beiden Deckschichten 20, 20' nähern sich zunächst die Bereiche des Äquators 44, d.h. die rand- bzw. umfangsseitigen Bereiche 48, der - hier konkaven - Oberfläche 28' der oberen Deckschicht 20' und der konvexen Oberfläche 64 der Zwischenschicht 22 aus Waben aneinander an. Bei absolut passgenauer Fertigung der beiden Deckschichten 20, 20' mit der Zwischenschicht 22 aus Waben müssen die zugeordneten Oberflächen 28', 64 also eine gewisse Strecke aufeinander abgleiten, bis die Deckschichten 20, 20' mit der Zwischenschicht 22 auch am Pol 42, d.h. in der Mitte 46, in gegenseitigen Kontakt gelangen. Es besteht also die Gefahr, dass zuvor aufgetragener Klebstoff oder andere Klebeschichten durch diesen gleitenden Kontakt abgeschürft werden. Eine ausreichend feste Verklebung wäre dann nicht gewährleistet. Wegen unvermeidbarer Fertigungstoleranzen besteht darüber hinaus die Gefahr, dass die Zwischenschicht 22 aus Waben stellenweise an der konkaven Oberfläche 28' der oberen Deckschicht 20' früher zur Anlage kommt. Es besteht daher die Gefahr einer Verklemmung während des Zusammenfügens. Möglicherweise macht der bereits aufgetragene Klebstoff ein Auseinanderfahren und ein weiteres Zusammenfahren der Bauteile unmöglich. Der gesamte Behälter 10 würde gegebenenfalls unbrauchbar oder bedürfte zumindest einer aufwendigen Überholung.

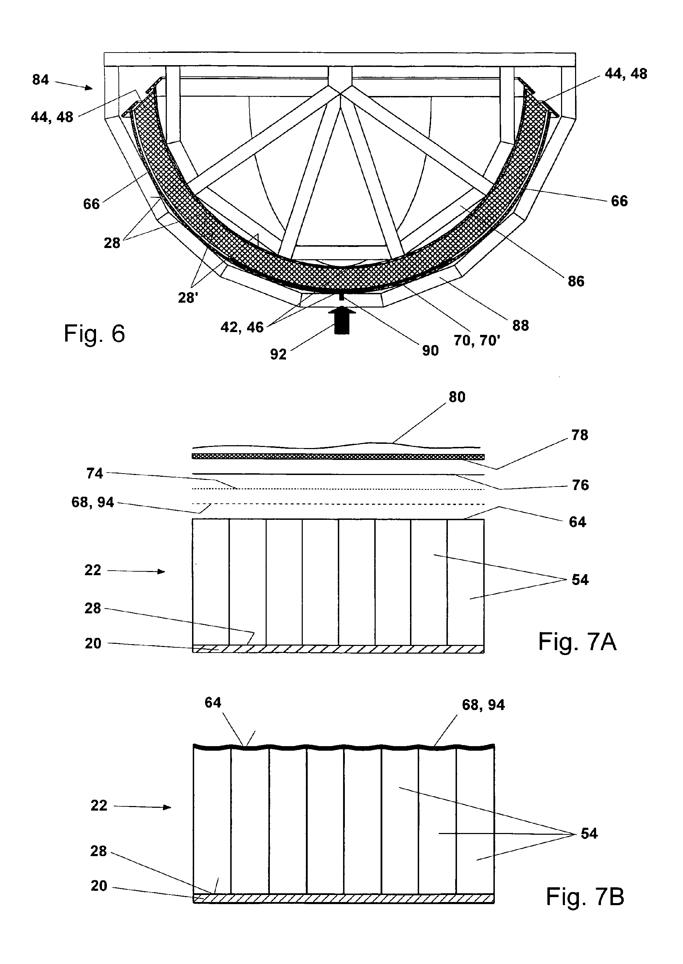

Wird hingegen die Zwischenschicht 22 aus Waben so abgefräst, dass ein Fügespalt 66 (vgl. Fig. 6) verbleibt, können beide Deckschichten 20, 20' ohne vorherigen Kontakt zusammengefügt werden. In diesem Fall muss der Klebstoff jedoch den Fügespalt 66 überbrücken und gleichzeitig eine ausreichend feste (Ver-) Klebung gewährleisten. Es hat sich herausgestellt, dass Fügespalte 66 von 0,5 bis 1,5 mm brauchbare Spaltmaße sind.

Zur Herstellung des erfindungsgemäßen Behälters 10, der eine leichte und stabile Zwischenschicht 22 Waben als Stützstoff verwendet, werden die Waben 50, 50' bei dem Verfahren nach der Erfindung flüssigkeitsdicht und/oder gas- oder luftdurchlässig versiegelt bzw. verschlossen bzw. abgedichtet. Aufgrund der offenen Zwischenschicht 22 aus Waben würden die Wabenzellen ansonsten mit dem Klebstoff gefüllt. Der Behälter 10 würde zu schwer und/oder in seiner thermischen Isolierfähigkeit beeinflusst. Dabei wird die Zwischenschicht 22 aus Waben mit einer Hilfsschicht 68 versehen. Die Hilfsschicht 68 wiederum wird mit der konkaven Oberfläche 28' der oberen Deckschicht 20' der Trennwand 14 unter Auftrag oder Einbringung eines Klebstoffs 70, insbesondere eines aufschäumenden Klebstoffs, vorzugsweise eines pastösen Klebers, Klebefilms oder Epoxidharzes, oder eines expandierenden Klebstoffs 70' oder Spleißklebers, verklebt, wie später ausgeführt ist.

### Verfahren 1

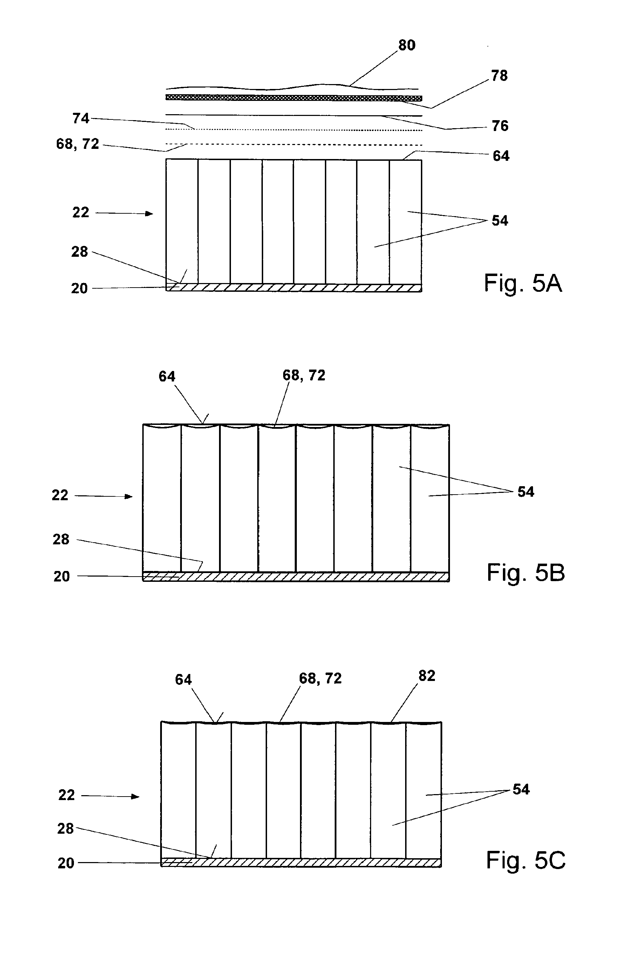

Ein erstes Verfahren nach der Erfindung wird anhand der Fig. 5A bis 5C erläutert.

Wie in der Fig. 5A dargestellt ist, ist die Zwischenschicht 22 aus Waben mit der konvexen Oberfläche 28 der Deckschicht 20 verklebt. Eine Hilfsschicht 68, die bevorzugt flüssigkeitsdicht ausgebildet ist, umfasst einen Klebefilm 72, der auf die Oberfläche 64 der Zwischenschicht 22 aus Waben aufgebracht wird. Es hat sich herausgestellt, dass schon ein Klebefilm 72 mit einem Flächengewicht von 300 g/m² ausreicht. Zur zusätzlichen Stabilisierung der Hilfsschicht 68 kann darüber hinaus wenigstens eine Lage aus vorimprägniertem Faserhalbzeug, ein sogenanntes Prepreg, und/oder textilem Halbzeug, insbesondere Glasfasergewebe, aufgebracht werden (nicht gezeigt).

Hierauf wird, wie die Fig. 5A ebenfalls schematisch zeigt, eine Schicht 74 aus Abreißgewebe gelegt und angedrückt. Die Schicht 74 aus Abreißgewebe wird mit einem üblichen Vakuumaufbau, bestehend aus einer Trennfolie 76, gegebenenfalls einem Belüftungsvlies 78 und einem Vakuumsack 80, versehen. Diese Anordnung wird evakuiert, so dass der Umgebungsdruck die Hilfsschicht 68 mit dem Klebefilm 72 mit der Zwischenschicht 22 aus Waben verpresst. Das Aushärten erfolgt in aller Regel bei erhöhter Temperatur und im Ofen, vorzugsweise während der Vakuumaufbau weiterhin an eine Vakuumpumpe angeschlossen bleibt.

Anschließend wird der Vakuumaufbau wieder entfernt und wird die Schicht 74 aus Abreißgewebe abgezogen. Die so hergestellte Hilfsschicht 68 besitzt entsprechend der Fig. 5B eine flächige Struktur, weist jedoch auch Poren auf.

Wie aus der Fig. 5C hervorgeht, kann auf die als Klebefilm 72 ausgebildete Hilfsschicht 68 anschließend ein flüssiger oder pastöser Spritzfüller 82 aufgebracht oder aufgetragen werden, um gegebenenfalls noch die Poren zu versiegeln. So wird durch die Schicht 74 aus Abreißgewebe eine Oberfläche bereitgestellt, auf der der Spritzfüller 82 ohne zusätzliche Oberflächenbehandlung haftet. Der Spritzfüller 82 wird vorzugsweise aufgespritzt, kann jedoch auch anderweitig, wie etwa durch Pinseln, Rollen oder ähnlichem, aufgetragen werden.

Alternativ oder kumulativ dazu kann auf die Hilfsschicht 68 auch ein Haftvermittler (nicht dargestellt) zur Sicherstellung einer ausreichenden Haftung aufgebracht werden.

Die Hilfsschicht 68, die einen Klebefilm 72 umfasst, gegebenenfalls mit Zusatzlagen und Spritzfüller 82 und/oder Haftvermittler, besitzt üblicherweise eine Dicke von einigen Zehntel Millimeter, die bei der spanabhebenden Bearbeitung, zum Beispiel beim Fräsen, insbesondere Konturfräsen, der Zwischenschicht 22 aus Waben zusätzlich zu berücksichtigen ist.

Nachdem eine solche flüssigkeitsdichte Hilfsschicht 68 auf der Oberfläche 64 der Zwischenschicht 22 aus Waben hergestellt wurde, können obere und untere Deckschicht 20, 20' zusammengefügt werden. Da noch kein Klebstoff 70 aufgetragen wurde, kann dieses Zusammenfügen beliebig häufig wiederholt werden, bis die gewünschte Endlage erreicht ist. Mögliche Verklemmungen oder andere Fehler können nachgearbeitet werden.

Entsprechend der Fig. 6 werden die zwei Deckschichten 20, 20' sodann in Position verbracht, zueinander und mit deren konkaven Oberflächen 28' nach oben ausgerichtet und fixiert. Ausrichtung und Fixierung der zwei Deckschichten 20, 20' erfolgen in bevorzugter Weise mit deren konkaven Oberflächen 28' nach oben, um den Fügespalt 66 zwischen den zwei Deckschichten 20, 20' ideal mit Klebstoff 70 zu füllen und gleichzeitig ein Ausfließen von noch nicht ausreagiertem Klebstoff 70 zu verhindern. Die Fixierung der zwei Deckschichten 20, 20' der Trennwand 14 zueinander und mit deren konkaven Oberflächen 28' nach oben erfolgt mittels einer Spanneinrichtung 84. Die Spanneinrichtung 84, die beispielhaft schematisch in der Fig. 6 gezeigt ist, ist in Form und Abmessung an die Form und Abmessung der zwei halbschalenförmigen Deckschichten 20, 20' angepasst. Es ist beispielsweise möglich, die untere Deckschicht 20 mit einer Innenkonstruktion 86 und die obere Deckschicht 20' mit einer Außenkonstruktion 88 zu stabilisieren.

Die eigentliche Verklebung erfolgt durch Injizieren bzw. Infusion des Klebstoffs 70 in den Fügespalt 66 zwischen der Oberfläche 64 der Zwischenschicht 22 aus Waben und der konkaven Oberfläche 28' der oberen Deckschicht 20'. Der Klebstoff 70 ist vorzugsweise dünnflüssig. Insbesondere darf der Klebstoff 70 nicht aushärten, bevor die Klebeflächen vollständig benetzt sind.

Eine ganz bevorzugte Verfahrensweise ist schematisch in der Fig. 6 gezeigt, wobei beide Deckschichten 20, 20' mit ihrer offenen Seite nach oben zeigen (Schüssel-Lage). Der Klebstoff 70 wird entweder durch eine Bohrung 90 am Pol 42 bzw. in der Mitte 46 der Deckschichten 20, 20' entsprechend Pfeil 92 injiziert oder durch eine Leitung, zum Beispiel einen Schlauch oder ein Kunststoff- oder Metallröhrchen, (nicht dargestellt) vom Äquator 44 bzw. rand- bzw. umfangsseitigen Bereich 48 zum Pol 42 geführt. Wird eine Leitung verwendet, müssen die dafür nötigen Aussparungen schon beim Fräsen der Zwischenschicht 22 aus Waben berücksichtigt werden.

### Verfahren 2

Ein weiteres Verfahren nach der Erfindung wird anhand der Fig. 7A und 7B erläutert.

Wie in der Fig. 7A dargestellt ist, umfasst eine Hilfsschicht 68, die wiederum bevorzugt flüssigkeitsdicht ausgebildet ist, eine Siegelfolie 94, die mit einem Klebstoff oder Klebefilm (nicht näher dargestellt) beschichtet ist. Als vorteilhaft hat sich als Siegelfolie 94 eine Polyvinylfluorid (PVF)-Folie erwiesen. Die Siegelfolie 94 kann in geeigneter Weise oberflächenbehandelt sein, um eine ausreichende Haftfestigkeit des Klebstoffs oder Klebefilms sicherzustellen. So ist es möglich, die Siegelfolie 94 beidseitig anzuätzen. Gleichermaßen lässt sich die Haftung der Siegelfolie 94 auch durch Fluorieren, Corona-Entladung, Plasma-Behandlung, thermische Behandlung (Flämmen), chemisches Beizen, Laser-Behandlung oder Ionenätzen (Sputtern) etc. verbessern. Anschließend wird auf die Siegelfolie 94 ein Klebstoff oder Klebefilm, zum Beispiel mit einem Flächengewicht von 300 g/m², ein-,oder beidseitig aufgebracht, beispielsweise aufgelegt und angedrückt bzw. aufgewalzt. Optional kann/können zusätzlich eine oder mehrere Schicht/en aus vorimprägniertem Faserhalbzeug, einem sogenannten Prepreg, und/oder einer Verstärkungslage aus textilem Halbzeug, wie zum Beispiel Glasfasergewebe oder ähnliches, aufgebracht werden. Gegebenenfalls wird der Klebstoff oder Klebefilm zusätzlich mit Hilfe eines Vakuumsackes (nicht gezeigt) angepresst, um Lufteinschlüsse zu vermeiden.

Es können jedoch auch andere Typen von Siegelfolie 94 verwendet werden. Für einen serienmäßigen Einsatz eignet sich beispielsweise bevorzugt ein vorfabriziertes Halbzeug. Auch ist es möglich, eine Siegelfolie 94 nur einseitig mit einem Klebefilm zu versehen, welcher der Zwischenschicht 22 aus Waben zugeordnet ist.

Ein üblicher Klebefilm besteht aus einem leichten textilen Trägermaterial, das mit flüssigem oder pastösem Klebstoff durchtränkt ist. Mit entsprechenden Anlagen kann dieser Klebstoff auch direkt auf die Siegelfolie 94 aufgebracht werden. Ebenso kann die Hilfsschicht 68 bzw. Siegelfolie 94 zusätzlich mit wenigstens einer Lage aus vorimprägniertem Faserhalbzeug, einem sogenannten Prepreg, und/oder einer Verstärkungslage aus textilem Halbzeug, wie zum Beispiel Glasfasergewebe oder ähnliches, versehen sein.

Zunächst wird die Zwischenschicht 22 aus Waben (kontur)gefräst, um eine Anpassung an die Geometrie der oberen Deckschicht 20' zu erreichen. Dabei ist wiederum zusätzlich der Dickenzuwachs zu berücksichtigen, um einen Fügespalt 66 mit der gewünschten Dicke herzustellen, nachdem die Hilfsschicht 68, die eine Siegelfolie 94 umfasst, in aller Regel einen Dikkenzuwachs der Zwischenschicht 22 aus Waben im Bereich von einigen Zehntel Millimeter zur Folge hat.

Die Hilfsschicht 68 in Form einer Kombination aus Siegelfolie 94 und Klebefilm wird entsprechend der Fig. 7A auf die Zwischenschicht 22 aus Waben aufgelegt und angedrückt. Da die Siegelfolie 94 bereits beidseitig mit einem Klebefilm beschichtet, kann die Siegelfolie 94 auch auf zweidimensional gekrümmte Flächen aufgebracht werden. Selbst wenn sich hierbei Falten in der Siegelfolie 94 ergeben sollten, liegen zwei Lagen der Siegelfolie 94 nicht "trocken" aufeinander. So kann ohne weiteres eine flüssigkeitsdichte Versiegelung der Zwischenschicht 22 aus Waben bei Überlappung einzelner Lagen der Siegelfolie 94 erreicht werden.

Sodann wird eine Schicht 74 aus Abreißgewebe auf die Hilfsschicht 68 aufgelegt und ein üblicher Vakuumaufbau, gegebenenfalls mit einer Trennfolie 76, einem Belüftungsvlies 78 und einem Vakuumsack 80, aufgebracht. Der Vakuumsack 80 wird evakuiert, so dass der Umgebungsdruck die Schicht 74 aus Abreißgewebe und die Hilfsschicht 68 in Form einer Siegelfolie 94 mit Klebeschicht mit der Oberfläche 64 der Zwischenschicht 22 aus Waben verpresst. Die Aushärtung erfolgt üblicherweise bei erhöhter Temperatur, während der Vakuumsack 80 an eine Vakuumpumpe angeschlossen bleibt.

Nach dem Abkühlen werden, wie in der Fig. 7B gezeigt ist, der Vakuumaufbau entfernt und die Schicht 74 aus Abreißgewebe abgezogen. Man erhält so eine flüssigkeitsdichte Versiegelung der Zwischenschicht 22 aus Waben mit der Hilfsschicht 68, auf die ein Klebstoff 70 unmittelbar aufgetragen werden kann.

Die anschließende Verklebung der Oberfläche 64 der Zwischenschicht 22 aus Waben und der oberen Deckschicht 22' mittels Klebstoff 70 und/oder Klebefilm kann in derselben Weise wie bei dem erfindungsgemäßen Verfahren, das anhand der Fig. 5A bis 5C beschrieben ist, erfolgen.

### Verfahren 3

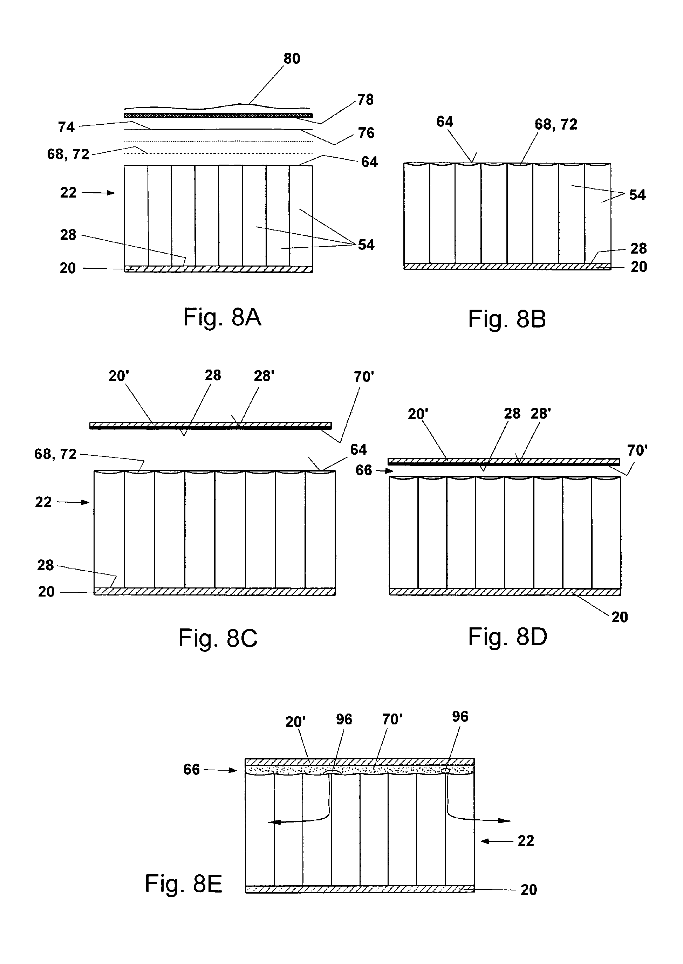

Ein noch anderes Verfahren nach der Erfindung wird anhand der Fig. 8A bis 8E erläutert.

Wie in der Fig. 8A dargestellt ist, wird eine Hilfsschicht 68, die bevorzugt porös, halbporös oder luft- oder gasdurchlässig ausgebildet ist, in Form eines Klebefilms 72, ohne oder mit wenigstens einem anderen textilen Halbzeug, auf die Oberfläche 64 der Zwischenschicht 22 aus Waben aufgebracht. Darauf wird eine Schicht 74 aus Abreißgewebe aufgelegt. Es folgt ein üblicher Vakuumaufbau mit einer Trennfolie 76, gegebenenfalls einem Belüftungsvlies 78 und einem Vakuumsack 80. Diese Anordnung wird evakuiert, so dass der Umgebungsdruck die Hilfsschicht 68 auf die Oberfläche 64 der Zwischenschicht 22 aus Waben presst. Die Aushärtung dessen erfolgt bei erhöhter Temperatur, während der Vakuumaufbau weiterhin an eine Vakuumpumpe angeschlossen bleibt.

Nach der Aushärtung werden der Vakuumaufbau und die Schicht 74 aus Abreißgewebe entsprechend der Fig. 8B entfernt. Auf diese Weise kann eine flächige Hilfsschicht 68 auf die Zwischenschicht 22 aus Waben aufgeklebt werden, die porös ist und somit Luft- oder Gasdurchtritte ermöglicht. Mit Ausnahme der Materialeigenschaften der Hilfsschicht 68 ähnelt die Ausführungsform des in den Fig. 8A bis 8E dargestellten erfindungsgemäßen Verfahrens somit dem erfindungsgemäßen Verfahren entsprechend den Fig. 5A und 5B.

Bei der vorliegenden Ausführung des erfindungsgemäßen Verfahrens kommt ein expandierender Klebstoff 70', ein sogenannter Spleißkleber, zum Verkleben von der Zwischenschicht 22 aus Waben bzw. der Hilfsschicht 68 und der oberen Deckschicht 20' zum Einsatz. Der Klebstoff 70', der als Paste mit unterschiedlichen Eigenschaften oder als Film mit definierter Dicke erhältlich ist, wird entsprechend der Fig. 8C auf der konkaven Oberfläche 28' der oberen Deckschicht 20' aufgebracht. Gegebenenfalls kann zusätzlich ein Haftvermittler oder eine anderweitige Oberflächenbehandlung Verwendung finden, um eine ausreichende Haftung des Klebstoffs 70' auf der Deckschicht 20' sicherzustellen. Ohne im Einzelnen dargestellt zu sein, wäre es alternativ dazu ebenso möglich, den Klebstoff 70' auf der Hilfsschicht 68 selbst aufzubringen.

Anschließend werden die Deckschichten 20, 20' entsprechend der Fig. 8D in ihre gewünschte Endstellung zusammengefahren. Der Klebstoff 70' wird unter Wärmeeinwirkung ausgehärtet und dabei aufgeschäumt. Der Fügespalt 66 wird ausfüllt. Diese Expansion kann unterstützt werden, indem der Druck im Fügespalt 66 vermindert wird. Gas- oder Luftblasen bzw. -einschlüsse 96 in dem Klebstoff 70' vergrößern sich dabei, so dass dessen Schichtdicke stärker zunimmt.

Bei ungleichmäßiger Expansion kommt der Klebstoff 70' mit der Zwischenschicht 22 aus Waben bzw. der Hilfsschicht 68 in einigen Bereichen schneller in Kontakt als in anderen Bereichen. Trotz alledem werden keine Gasblasen 96 eingeschlossen. So besteht über die poröse Hilfsschicht 68 und die Zwischenschicht 22 aus Waben eine Verbindung zur Umgebung. Entsprechend der Fig. 8E kann der Inhalt der Gasblasen 96 mithin bei Expansion des Klebstoffs 70' ohne weiteres herausgedrückt werden.

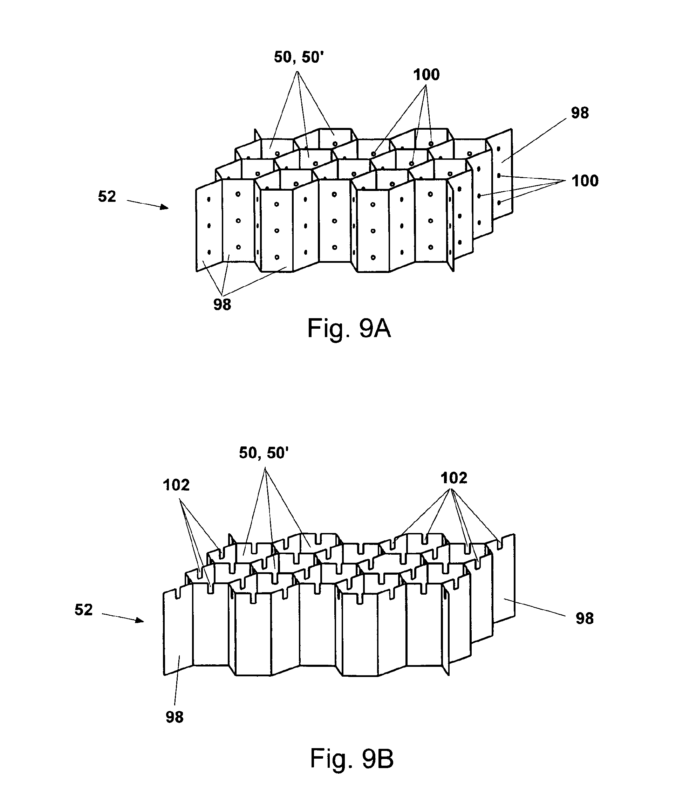

Zu diesem Zweck ist erfindungsgemäß vorgesehen, die Wände 98 der Waben 50, 50' entsprechend der Fig. 9A mit Perforationen 100 auszubilden.

In alternativer oder kumulativer Ausgestaltung können die Wände 98 entsprechend der Fig. 9B ebenso mit Schlitzen 102 zur Kommunikation zwischen den einzelnen Wabenzellen versehen sein. In diesem Fall sind die Schlitze 102 der Waben 50, 50' der einen der zwei Deckschichten 20, 20', nämlich hier der unteren Deckschicht 20, mit welcher die Zwischenschicht 22 aus Waben zuerst verklebt wird, zugewandt angeordnet. Andernfalls würden die Schlitze 102 beim der spanabhebenden Bearbeitung, zum Beispiel beim Fräsen, insbesondere Konturfräsen, abgetragen werden.

Somit ist ein Gasaustausch zwischen den einzelnen Wabenzellen ermöglicht. Ausbildung, Anordnung und Anzahl der Perforationen 100 bzw. Schlitze 102 sind individuell und beliebig an den jeweiligen Anwendungszweck und die Fertigungsweise anpassbar.

Das erfindungsgemäße Verfahren ist nicht auf die dargestellten Ausführungsformen beschränkt. So ist es ohne weiteres möglich, sämtliche in der WO 2010/037561 A1 beschriebenen Verfahren zum Injizieren einer Zwischenschicht aus Polymer-Schaum auf das vorliegende Verfahren nach der Erfindung zu übertragen und beim Injizieren des Klebstoffs 70, 70' analog anzuwenden. Insoweit ist es denkbar, das Auftragen des Klebstoffs 70, insbesondere eines aufschäumenden Klebstoffs, vorzugsweise eines pastösen Klebers, Filmklebers oder Epoxidharzes, oder eines expandierenden Klebstoffs 70' oder Spleißklebers, auf die Hilfsschicht 68 und auf die konkave Oberfläche 28' der oberen Deckschicht 20' der Trennwand 14 oder die konvexe Oberfläche 28 der unteren Deckschicht 20 der Trennwand 14, oder das Einbringen des Klebstoffs 70, insbesondere eines aufschäumenden Klebstoffs, vorzugsweise eines pastösen Klebers, eines Epoxidharzes oder eines expandierenden Klebstoffs 70' oder Spleißklebers, in einen Zwischenraum 24 zwischen der Hilfsschicht 68 und der konkaven Oberfläche 28' der oberen Deckschicht 20' der Trennwand 14 oder der konvexen Oberfläche 28 der unteren Deckschicht 20 der Trennwand 14, mit einer Befüllungs- oder Dosierlanze (nicht gezeigt) durch Gießen oder Sprühen vorzunehmen. Das Kleben kann mittels Harzinfusion erfolgen. Ebenso ist es möglich, dass der Klebstoff 70, 70' in die konkave Oberfläche 28' der oberen Deckschicht 20' der Trennwand 14 in einen Bereich des Pols 42 der oberen Deckschicht 20' eingefüllt und durch anschließende Absenkung der konvexen Oberfläche 28 der unteren Deckschicht 20 der Trennwand 14 über die konkave Oberfläche 28' der oberen Deckschicht 20' gleichmäßig verteilt wird. Weiter ist denkbar, dass der Klebstoff 70, 70' über mindestens einen Schlauch (nicht dargestellt) und/oder mindestens eine Ausnehmung, der/die in der ausgehärteten Zwischenschicht 22 der Trennwand 14 angeordnet bzw. vorgesehen ist/sind, oder mindestens einen Kanal (nicht gezeigt), der in der einen oder den zwei Deckschichten 20, 20' angeordnet bzw. vorgesehen ist, injiziert oder infiltriert wird. Selbstverständlich kann ebenso vorgesehen sein, dass der Klebstoff 70, 70' über den mindestens einen Schlauch (nicht gezeigt) und/oder die mindestens eine Ausnehmung in einem Bereich des Äquators 44 der zwei Deckschichten 20, 20' injiziert oder infiltriert, in einen Bereich des Pols 42 der der zwei Deckschichten 20, 20' geführt und anschließend durch Schwerkraft hin zu dem Bereich des Äquators 44 der zwei Deckschichten 20, 20' gleichmäßig verteilt wird. Weiterhin ließe sich der Klebstoff 70, 70' über den mindestens einen Kanal (nicht gezeigt) in einem Bereich des Pols 42 der zwei Deckschichten 20, 20' injizieren oder infiltrieren und anschließend durch Schwerkraft hin zu dem Bereich des Äquators 44 der zwei Deckschichten 20, 20' gleichmäßig verteilen. Schließlich könnte es von Vorteil sein, dass der Klebstoff 70, 70' über einen gesonderten Spalt oder den Fügespalt 66, der zwischen der ausgehärteten Zwischenschicht 22 der Trennwand 14 und der konkaven Oberfläche 28' der oberen Deckschicht 20' der Trennwand 14 oder der konvexen Oberfläche 28 der unteren Deckschicht 20 der Trennwand 14 gebildet ist, injiziert oder infiltriert wird.

Weiterhin ist die Erfindung nicht auf die beschriebenen Ausführungsbeispiele betreffend die Kombinationen von Klebstoff 70, 70', den Klebefilm 72 und sonstige erwähnten Klebstoffe, Kleber und Klebefilme beschränkt. So sind ohne weiteres beliebige andere Kombinationen davon möglich.

Schließlich ist die Erfindung nicht auf die vorstehenden Ausführungsformen insgesamt beschränkt, die sämtlich anhand eines erfindungsgemäßen Behälters 10, wie in der Fig. 1 dargestellt, bei welchem die Trennwand 14 konkav ausgebildet ist, beschrieben sind. Die hier beschriebenen Ausführungsformen lassen sich vielmehr uneingeschränkt auch auf einen erfindungsgemäßen Behälter 10, wie in der Fig. 2 gezeigt, übertragen, bei welchem die Trennwand 14 konvex ausgebildet ist. In diesem Fall ist lediglich eine kinematische Umkehr von konvexer Oberfläche der unteren Deckschicht der Trennwand 14 oder konkaven Oberfläche der oberen Deckschicht der Trennwand 14 vorzunehmen, die gleichermaßen abgedeckt ist.

## Patentansprüche

1. Behälter zum Aufnehmen und Speichern von kryogenen Fluiden, insbesondere von kryogenen Flüssigkeiten und viskosen Stoffen, mit einem Mantel (12) und mindestens einer Trennwand (14), welche den Innenraum (16) des Behälters (10) in wenigstens zwei einander benachbarte Kammern (18, 18') unterteilt, **dadurch gekennzeichnet, dass** die mindestens eine Trennwand (14) in Sandwichbauweise ausgebildet ist und zwei jeweils einer der wenigstens zwei einander benachbarten Kammern (18, 18') zugewandte Deckschichten (20, 20') sowie eine in einem Zwischenraum (24) zwischen den zwei Deckschichten (20, 20') angeordnete, mechanische Kräfte und/oder Momente übertragende und wärmeisolierende oder einen Wärmefluss reduzierende Zwischenschicht (22) aus Waben umfasst, wobei die mechanische Kräfte und/oder Momente übertragende und wärmeisolierende oder einen Wärmefluss reduzierende Zwischenschicht (22) aus Waben den Zwischenraum (24) zwischen den zwei Deckschichten (20, 20') vollständig oder im Wesentlichen vollständig ausfüllt und mit den zwei Deckschichten (20, 20') verklebt ist.

2. Behälter nach Anspruch 1, **dadurch gekennzeichnet, dass** die mechanische Kräfte und/oder Momente übertragende und wärmeisolierende oder einen Wärmefluss reduzierende Zwischenschicht (22) aus Waben mit einem Klebefilm (56) oder einem pastösen Kleber mit der konvexen Oberfläche (28) der unteren Deckschicht (20) der Trennwand (14) oder der konkaven Oberfläche (28') der oberen Deckschicht (20') der Trennwand (14) verklebt ist, wobei Zwischenräume (58) zwischen zueinander benachbarten Segmenten (54) von Waben (50, 50') mit einem expandierenden Klebstoff (60) oder Spleißkleber gefüllt sind.

3. Behälter nach Anspruch 1 oder 2, **dadurch gekennzeichnet, dass** die mechanische Kräfte und/oder Momente übertragende und wärmeisolierende oder einen Wärmefluss reduzierende Zwischenschicht (22) aus Waben mit einer Hilfsschicht (68) versehen ist, die mit der konkaven Oberfläche (28') der oberen Deckschicht (20') der Trennwand (14) oder der konvexen Oberfläche (28) der unteren Deckschicht (20) der Trennwand (14) unter Auftrag oder Einbringung eines Klebstoffs (70), insbesondere eines aufschäumenden Klebstoffs, vorzugsweise eines pastösen Klebers, Klebefilms oder Epoxidharzes, oder eines expandierenden Klebstoffs (70') oder Spleißklebers, verklebt ist.

4. Behälter nach Anspruch 3, **dadurch gekennzeichnet, dass** die Hilfsschicht (68) der mechanische Kräfte und/oder Momente übertragenden und wärmeisolierenden oder einen Wärmefluss reduzierenden Zwischenschicht (22) aus Waben flüssigkeitsdicht und/oder porös, halbporös oder gas- oder luftdurchlässig ausgebildet ist.

5. Behälter nach Anspruch 3 oder 4, **dadurch gekennzeichnet, dass** die Hilfsschicht (68) der mechanische Kräfte und/oder Momente übertragenden und wärmeisolierenden oder einen Wärmefluss reduzierenden Zwischenschicht (22) aus Waben einen Klebefilm (72), ohne oder mit wenigstens einer Lage aus vorimprägniertem Faserhalbzeug und/oder textilem Halbzeug, insbesondere Glasfasergewebe, umfasst.

6. Behälter nach Anspruch 5, **dadurch gekennzeichnet, dass** die Hilfsschicht (68) der mechanische Kräfte und/oder Momente übertragenden und wärmeisolierenden oder einen Wärmefluss reduzierenden Zwischenschicht (22) aus Waben einen flüssigen oder pastösen Spritzfüller (82) zum Versiegeln von Poren des Klebefilms (72) und/oder einen Haftvermittler zur Sicherstellung einer ausreichenden Haftung umfasst.

7. Behälter nach Anspruch 3 oder 4, **dadurch gekennzeichnet, dass** die Hilfsschicht (68) der mechanische Kräfte und/oder Momente übertragenden und wärmeisolierenden oder einen Wärmefluss reduzierenden Zwischenschicht (22) aus Waben eine einseitig, vorzugsweise beidseitig, mit einem Klebefilm beschichtete, Siegelfolie (94) umfasst.

8. Behälter nach einem der Ansprüche 1 bis 7, **dadurch gekennzeichnet, dass** die Waben (50, 50') der mechanische Kräfte und/oder Momente übertragenden und wärmeisolierenden oder einen Wärmefluss reduzierenden Zwischenschicht (22) Wände (98) aufweisen, die mit Perforationen (100) und/oder Schlitzen (102) zur Kommunikation zwischen den einzelnen Wabenzellen versehen sind, wobei insbesondere die Schlitze (102) der Waben (50, 50') der einen der zwei Deckschichten (20, 20'), mit welcher die Zwischenschicht (22) aus Waben zuerst verklebt wird, zugewandt angeordnet sind.

9. Behälter nach einem der Ansprüche 1 bis 8, **dadurch gekennzeichnet, dass** die mechanische Kräfte und/oder Momente übertragende und wärmeisolierende oder einen Wärmefluss reduzierende Zwischenschicht (22) aus Waben eine Dichte und Festigkeit aufweist, die von der Mitte (46) hin zu einem rand- bzw. umfangsseitigen Bereich (48) der zwei Deckschichten (20, 20') gleich ist oder in einem rand- bzw. umfangsseitigen Bereich (48) der zwei Deckschichten (20, 20') höher ist als in der Mitte (46) der zwei Deckschichten (20, 20').

10. Behälter nach einem der Ansprüche 1 bis 9, **dadurch gekennzeichnet, dass** die mechanische Kräfte und/oder Momente übertragende und wärmeisolierende oder einen Wärmefluss reduzierende Zwischenschicht (22) aus Waben in einem rand- bzw. umfangsseitigen Bereich (48) der zwei Deckschichten (20, 20') mit einer Vergussmasse (52) abgedichtet ist, wobei insbesondere die Vergussmasse (52) aus einem offen-oder geschlossenporigen Polymer-Schaum, insbesondere aus Polyurethan, Polyethylen oder Epoxidharzen, gebildet ist, und insbesondere mit Hohlkugeln aus Kunststoff oder Glas versehen ist.

11. Behälter nach einem der Ansprüche 1 bis 10, **dadurch gekennzeichnet, dass** die zwei jeweils einer der wenigstens zwei einander benachbarten Kammern (18, 18') zugewandten Deckschichten (20, 20') der Trennwand (14) eine zueinander im Wesentlichen identische Form oder eine voneinander abweichende Form aufweisen, derart, dass die Deckschichten (20, 20') vom Pol (42) zum Äquator (44) hin voneinander zunehmend beabstandet sind.

12. Verfahren zum Herstellen eines Behälters zum Aufnehmen und Speichern von kryogenen Fluiden, insbesondere von kryogenen Flüssigkeiten und viskosen Stoffen, mit einem Mantel (12) und mindestens einer Trennwand (14), welche den Innenraum (16) des Behälters (10) in wenigstens zwei einander benachbarte Kammern (18, 18') unterteilt, insbesondere nach einem der Ansprüche 1 bis 18, umfassend folgende Schritte:
a) Herstellen von zwei jeweils einer der wenigstens zwei einander benachbarten Kammern (18, 18') zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten (20, 20') der Trennwand (14),
b) Verkleben einer mechanische Kräfte und/oder Momente übertragenden und wärmeisolierenden oder einen Wärmefluss reduzierenden Zwischenschicht (22) aus Waben mit der konvexen Oberfläche (28) der unteren Deckschicht (20) der Trennwand (14) oder der konkaven Oberfläche (28') der oberen Deckschicht (20') der Trennwand (14) mittels eines Klebefilms (56) oder eines pastösen Klebers,
c) Aufbringen oder Auftragen einer Hilfsschicht (68) auf die Zwischenschicht (22) aus Waben, Verpressen der Hilfsschicht (68) und der Zwischenschicht (22) aus Waben miteinander unter Vakuumbeaufschlagung oder anderer mechanischer Beaufschlagung und Aushärten der Hilfsschicht (68),
d) Ausrichten und Fixieren der zwei Deckschichten (20, 20') der Trennwand (14) zueinander und mit deren konkaven oder konvexen Oberflächen (28, 28'),
e) Auftragen eines Klebstoffs (70), insbesondere eines aufschäumenden Klebstoffs, vorzugsweise eines pastösen Klebers, Klebefilms oder Epoxidharzes, oder eines expandierenden Klebstoffs (70') oder Spleißklebers, auf die Hilfsschicht (68) und/oder auf die konkave Oberfläche (28') der oberen Deckschicht (20') der Trennwand (14) oder die konvexe Oberfläche (28) der unteren Deckschicht (20) der Trennwand (14), oder Einbringen eines Klebstoffs (70), insbesondere eines aufschäumenden Klebstoffs, vorzugsweise eines pastösen Klebers, eines Epoxidharzes oder eines expandierenden Klebstoffs (70') oder Spleißklebers, in einen Zwischenraum (24) zwischen der Hilfsschicht (68) und der konkaven Oberfläche (28') der oberen Deckschicht (20') der Trennwand (14) oder der konvexen Oberfläche (28) der unteren Deckschicht (20) der Trennwand (14), und
f) Aushärten des auf die Hilfsschicht (68) aufgetragenen oder in den Zwischenraum (24) zwischen der Hilfsschicht (68) und der konkaven Oberfläche (28') der oberen Deckschicht (20') der Trennwand (14) oder der konvexen Oberfläche (28) der unteren Deckschicht (20) der Trennwand (14) eingebrachten Klebstoffs (70, 70').

13. Verfahren nach Anspruch 12, **dadurch gekennzeichnet, dass** das Verkleben gemäß Schritt b) nach Anspruch 22 ein Aufbringen der mechanische Kräfte und/oder Momente übertragenden und wärmeisolierenden oder einen Wärmefluss reduzierenden Zwischenschicht (22) aus Waben auf die konvexe Oberfläche (28) der unteren Deckschicht (20) der Trennwand (14) oder die konkave Oberfläche (28') der oberen Deckschicht (20') der Trennwand (14) mittels des Klebefilms (56) oder pastösen Klebers, ein Verpressen der unteren Deckschicht (20) oder der oberen Deckschicht (20') der Trennwand (14) mit der Zwischenschicht (22) aus Waben mittels Vakuumbeaufschlagung oder anderer mechanischer Beaufschlagung und ein Aushärten des Klebefilms (56) oder des pastösen Klebers, gegebenenfalls unter Wärmeeinwirkung, vorzugsweise mittels Infrarot- oder Mikrowellenbestrahlung, umfasst.

14. Verfahren nach Anspruch 12 oder 13, **dadurch gekennzeichnet, dass** Zwischenräume (58) zwischen zueinander benachbarten Segmenten (54) von Waben (50) mit einem expandierenden Klebstoff (60) oder Spleißkleber gefüllt werden, der insbesondere in Schritt b) ausgehärtet wird.

15. Verfahren nach einem der Ansprüche 12 bis 14, **dadurch gekennzeichnet, dass** ein Aufbringen oder Auftragen der Hilfsschicht (68) auf die Zwischenschicht (22) aus Waben gemäß Schritt c) mittels eines Klebstoffs, eines Klebefilms oder eines pastösen Klebers vorgenommen wird, der ausgehärtet wird.

16. Verfahren nach einem der Ansprüche 12 bis 15, **dadurch gekennzeichnet, dass** auf die Zwischenschicht (22) aus Waben eine flüssigkeitsdichte und/oder poröse, halbporöse oder gas- oder luftdurchlässige Hilfsschicht (68) aufgebracht oder aufgetragen wird.

17. Verfahren nach einem der Ansprüche 12 bis 16, **dadurch gekennzeichnet, dass** ein Klebefilm (72) ohne oder mit wenigstens einer Lage aus vorimprägniertem Faserhalbzeug und/oder textilem Halbzeug, insbesondere Glasfasergewebe, oder eine ein- oder beidseitig mit einem Klebefilm beschichtete Siegelfolie (94) als Hilfsschicht (68) auf die Zwischenschicht (22) aus Waben aufgebracht oder aufgetragen wird.

18. Verfahren nach einem der Ansprüche 12 bis 17, **dadurch gekennzeichnet, dass** die Hilfsschicht (68) zum Verpressen und Aushärten der unteren Deckschicht (20) oder der oberen Deckschicht (20') der Trennwand (14), des Klebefilms (72) oder des pastösen Klebers, der Zwischenschicht (22) aus Waben und der Hilfsschicht (68) miteinander unter Vakuumbeaufschlagung oder anderer mechanischer Beaufschlagung vor der Vakuumbeaufschlagung oder anderen mechanischen Beaufschlagung mit einer Schicht (74) aus Abreißgewebe und einer Trennfolie (76), einem Belüftungsvlies (78) sowie einer Vakuumfolie (80), versehen und überdeckt wird und nach erfolgter Vakuumbeaufschlagung oder anderen mechanischen Beaufschlagung von der Schicht (74) aus Abreißgewebe und der Trennfolie(76), dem Belüftungsvlies (78) sowie der Vakuumfolie (80) wieder befreit wird.

19. Verfahren nach einem der Ansprüche 12 bis 18, **dadurch gekennzeichnet, dass** auf die als Klebefilm (72) ausgebildete Hilfsschicht (68) ein flüssiger oder pastöser Spritzfüller (82) zum Versiegeln von Poren des Klebefilms (72) und/oder ein Haftvermittler zur Sicherstellung einer ausreichenden Haftung aufgebracht oder aufgetragen wird.

20. Verfahren nach einem der Ansprüche 12 bis 19, **dadurch gekennzeichnet, dass** das Auftragen des Klebstoffs (70), insbesondere eines aufschäumenden Klebstoffs, vorzugsweise eines pastösen Klebers, Klebefilms oder Epoxidharzes, oder eines expandierenden Klebstoffs (70') oder Spleißklebers, auf die Hilfsschicht (68) und auf die konkave Oberfläche (28') der oberen Deckschicht (20') der Trennwand (14) oder die konvexe Oberfläche (28) der unteren Deckschicht (20) der Trennwand (14), oder das Einbringen des Klebstoffs (70), insbesondere eines aufschäumenden Klebstoffs, vorzugsweise eines pastösen Klebers, eines Epoxidharzes oder eines expandierenden Klebstoffs (70') oder Spleißklebers, in einen Zwischenraum (24) zwischen der Hilfsschicht (68) und der konkaven Oberfläche (28') der oberen Deckschicht (20') der Trennwand (14) oder der konvexen Oberfläche (28) der unteren Deckschicht (20) der Trennwand (14), mit einer Befüllungs- oder Dosierlanze durch Gießen oder Sprühen vorgenommen wird, oder dass der Klebstoff (70, 70') in die konkave Oberfläche (28') der oberen Deckschicht (20') der Trennwand (14) in einen Bereich des Pols (42) der oberen Deckschicht (20') eingefüllt und durch anschließende Absenkung der konvexen Oberfläche (28) der unteren Deckschicht (20) der Trennwand (14) über die konkave Oberfläche (28') der oberen Deckschicht (20') gleichmäßig verteilt wird, oder dass der Klebstoff (70, 70') über mindestens einen Schlauch und/oder mindestens eine Ausnehmung, der/die in der ausgehärteten Zwischenschicht (22) der Trennwand (14) angeordnet bzw. vorgesehen ist/sind, oder mindestens einen Kanal, der in der einen oder den zwei Deckschichten (20, 20') angeordnet bzw. vorgesehen ist, injiziert oder infiltriert wird, oder dass der Klebstoff (70, 70') über den mindestens einen Schlauch und/oder die mindestens eine Ausnehmung in einem Bereich des Äquators (44) der zwei Deckschichten (20, 20') injiziert oder infiltriert, in einen Bereich des Pols (42) der der zwei Deckschichten (20, 20') geführt und anschließend durch Schwerkraft hin zu dem Bereich des Äquators (44) der zwei Deckschichten (20, 20') gleichmäßig verteilt wird, oder dass der Klebstoff (70, 70') über den mindestens einen Kanal in einem Bereich des Pols (42) der zwei Deckschichten (20, 20') injiziert oder infiltriert und anschließend durch Schwerkraft hin zu dem Bereich des Äquators (44) der zwei Deckschichten (20, 20') gleichmäßig verteilt wird, oder dass der Klebstoff (70, 70') über einen Spalt, der zwischen der ausgehärteten Zwischenschicht (22) der Trennwand (14) und der konkaven Oberfläche (28') der oberen Deckschicht (20') der Trennwand (14) oder der konvexen Oberfläche (28) der unteren Deckschicht (20) der Trennwand (14) gebildet ist, injiziert oder infiltriert wird.

21. Verwendung eines Behälters nach einem der vorhergehenden Ansprüche zum Aufnehmen und Speichern von Flüssigkeiten und viskosen Stoffen, insbesondere von kryogenen Fluiden, vorzugsweise von Sauerstoff und Wasserstoff, in Fahrzeugen, insbesondere in Luftfahrzeugen oder Fluggeräten der Luft-und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, insbesondere zum Aufnehmen und Speichern von Flüssigkeiten und viskosen Stoffen, insbesondere von kryogenen Fluiden, für Raketen-Treibstofftanks oder Satellitentanks.
